# EUROPÄISCHE PATENTSCHRIFT

(11) **EP 3 677 386 B1**
(45) Veröffentlichungstag und Bekanntmachung des Hinweises auf die Patenterteilung: **24.11.2021**
(21) Anmeldenummer: 20155766.7
(22) Anmeldetag: 16.01.2016
(51) Int. Cl.: B25F 5/02, E01H 1/08, A01G 20/47

(54) **ANORDNUNG MIT EINEM HANDGEFÜHRTEN ARBEITSGERÄT UND MIT EINER ABSTÜTZVORRICHTUNG UND HANDGEFÜHRTES ARBEITSGERÄT**
ASSEMBLY WITH A HAND-HELD TOOL AND WITH A SUPPORT DEVICE AND HAND-HELD TOOL
AGENCEMENT DOTÉ D'UN OUTIL DE TRAVAIL GUIDÉ À LA MAIN ET D'UN DISPOSITIF DE SUPPORT ET OUTIL DE TRAVAIL GUIDÉ À LA MAIN

(30) Priorität: 21.01.2015 DE 102015000731
(43) Veröffentlichungstag der Anmeldung: 08.07.2020
(62) Teilanmeldung aus: 16000103.8
(73) Patentinhaber: Andreas Stihl AG & Co. KG, 71336 Waiblingen (DE)
(72) Erfinder: Barth, Christian, 71404 Korb (DE); Hittmann, Markus, 71384 Weinstadt (DE); Maier, Thomas, 72669 Unterensingen (DE); Winterholler, Johann, 70567 Stuttgart (DE); Schwalk, Matti, 71732 Tamm (DE); Oberhofer, Felix, 70327 Stuttgart (DE)
(74) Vertreter: Reinhardt, Annette

(56) Entgegenhaltungen:
- EP-A1- 1 740 070
- US-A- 5 620 121
- US-A1- 2012 131 762
- US-A1- 2014 140 861
- US-A1- 2014 291 362

## Beschreibung

Die Erfindung betrifft eine Anordnung mit einem handgeführten Arbeitsgerät und einer Abstützvorrichtung der im Oberbegriff des Anspruchs 1 angegebenen Gattung.

Aus der DE 10 2007 048 104 A1 ist ein handgeführtes Arbeitsgerät, nämlich ein Freischneider, mit einer Gurtanordnung bekannt. Der Freischneider besitzt einen Haken, der zur Einhängung an der Gurtanordnung vorgesehen ist. Der Haken bildet mit der Öse eine flexible Verbindung, über die die Gewichtskraft des Arbeitsgeräts aufgenommen werden kann. Im Betrieb stützt sich das Arbeitsgerät seitlich an der Tragplatte der Gurtanordnung ab.

Aus der US 5,620,121 A geht eine schnell lösbare Abstützung für einen Freischneider hervor, bei der sich der Freischneider an einer an einem Traggurt gehaltenen Abstützplatte abstützt. Der Freischneider ist über ein Kugelgelenk auf einen nach außen ragenden Abschnitt der Abstützplatte aufgesetzt. Durch das Kugelgelenk soll eine Beweglichkeit des Schneidkopfs in Hochrichtung und Querrichtung ermöglicht werden. Das Dokument zeigt die Merkmale des Oberbegriffs des Anspruchs 1.

Aus der US 2014/0140861 A1 geht ein elektrisch angetriebenes Blasgerät hervor. Zur Energieversorgung dient eine vom Bediener auf dem Rücken getragene Batterie, die über ein elektrisches Kabel mit dem Blasgerät verbunden ist.

Die US 2012/131762 A1, die US 2014/291362 A1 und die EP 1 740 070 A1 zeigen Traggurte zum Transport von Arbeitsgeräten.

Der Erfindung liegt die Aufgabe zugrunde, eine Anordnung mit einem handgeführten Arbeitsgerät und einer Abstützvorrichtung zu schaffen, die ein ergonomisches und kraftsparendes Arbeiten mit dem Arbeitsgerät ermöglicht.

Bezüglich der Anordnung mit einem handgeführten Arbeitsgerät und mit einer Abstützvorrichtung wird die Aufgabe durch eine Anordnung mit den Merkmalen des Anspruchs 1 gelöst.

Die Anordnung besitzt eine Abstützvorrichtung zur Abstützung des Arbeitsgeräts im Betrieb. Es ist eine Verbindungseinrichtung vorgesehen, die an einer ersten Befestigungsstelle an einer vom Bediener zu tragenden Halterung und an einer zweiten Befestigungsstelle an dem Arbeitsgerät gehalten ist. An der zweiten Befestigungsstelle ist die Verbindungseinrichtung um mindestens eine Schwenkachse schwenkbar gelagert. Es ist vorgesehen, dass der Schwerpunkt des Arbeitsgeräts und die erste Befestigungsstelle in Arbeitslage des Arbeitsgeräts einen in horizontaler und bezogen auf den Bediener in seitlicher Richtung gemessenen Abstand zueinander aufweisen. Die erste Befestigungsstelle liegt demnach bezogen auf den Bediener neben dem Schwerpunkt des Arbeitsgeräts. Die Halterung besitzt an der ersten Befestigungsstelle Mittel zur mindestens teilweisen Abstützung des Kippmoments, das die Gewichtskraft des Arbeitsgeräts an der ersten Befestigungsstelle aufgrund des seitlichen Abstands ausübt. Über die Halterung wird demnach nicht nur die Gewichtskraft aufgenommen, sondern auch das von der Gewichtskraft an der ersten Befestigungsstelle erzeugte Kippmoment. Das Kippmoment wird dabei nicht an einer Halteplatte oder dgl. aufgenommen, an der sich das Arbeitsgerät abstützt, sondern an der ersten Befestigungsstelle selbst. Dadurch, dass das Kippmoment mindestens teilweise an der ersten Befestigungsstelle von der Halterung aufgenommen wird, muss dieses Kippmoment im Betrieb höchstens teilweise vom Bediener aufgenommen werden. Dadurch kann das Arbeitsgerät mit geringem Kraftaufwand bedient werden, so dass ein ermüdungsfreier Betrieb möglich ist.

Der seitliche Abstand zwischen dem Schwerpunkt und der ersten Befestigungsstelle beträgt vorteilhaft von etwa 5 cm bis etwa 15 cm, insbesondere von etwa 7 cm bis etwa 11 cm. Als besonders vorteilhaft hat sich ein Abstand von etwa 10 cm herausgestellt. Dadurch kann das Arbeitsgerät an der ersten Befestigungsstelle weitgehend frei hängen, ohne seitlich mit dem Bediener in Kontakt zu kommen. Gleichzeitig ist das von der Halterung aufzunehmende Kippmoment vergleichsweise klein, so dass ein einfacher Aufbau der Halterung möglich ist. Es kann vorteilhaft sein, wenn die Lage der zweiten Befestigungsstelle einstellbar ist. Hierzu sind vorteilhaft die Länge, die Gestalt und/oder die Ausrichtung der Verbindungseinrichtung einstellbar. Auch eine konstruktiv fest vorgegebene Lage der zweiten Befestigungsstelle relativ zur ersten Befestigungsstelle kann jedoch vorteilhaft sein. Auch die Lage der zweiten Befestigungsstelle an dem Arbeitsgerät und/oder die Lage der ersten Befestigungsstelle an der Halterung kann einstellbar sein.

Bevorzugt ist die zweite Befestigungsstelle innerhalb des Gehäuses angeordnet. Auch eine Anordnung der zweiten Befestigungsstelle außerhalb des Gehäuses kann jedoch vorteilhaft sein. Vorteilhaft ist die zweite Befestigungsstelle nahe am Schwerpunkt des Arbeitsgeräts angeordnet. Der horizontale Abstand der zweiten Befestigungsstelle zum Schwerpunkt ist vorteilhaft möglichst klein. Um das Kippmoment vollständig an der ersten Befestigungsstelle aufzunehmen, ist vorteilhaft vorgesehen, dass die zweite Befestigungsstelle und der Schwerpunkt des Arbeitsgeräts in einer gemeinsamen vertikalen Ebene liegen. Besonders vorteilhaft liegt der Schwerpunkt etwa senkrecht unter der zweiten Befestigungsstelle. Dadurch ist das Arbeitsgerät an der zweiten Befestigungsstelle sowohl in seitlicher Richtung als auch in einer nach vorne verlaufenden Richtung ausbalanciert gehalten und kann ausgehend von dieser ausbalancierten Lage mit sehr geringem Kraftaufwand vom Bediener verschwenkt werden. Die Gewichtskraft des Arbeitsgeräts wird vollständig an der ersten Befestigungsstelle der Halterung aufgenommen.

Vorteilhaft ist das Arbeitsgerät ein Blasgerät, das im Betrieb einen Blasluftstrom durch ein Blasrohr fördert. Die Verbindungseinrichtung nimmt vorteilhaft die im Betrieb von dem austretenden Blasluftstrom erzeugte Rückstoßkraft auf. Insbesondere bei Blasgeräten mit hoher Blasleistung bildet die Rückstoßkraft einen Hauptteil der vom Bediener aufzunehmenden Kräfte. Dadurch, dass die Verbindungseinrichtung im Betrieb die von dem austretenden Blasluftstrom erzeugte Rückstoßkraft aufnimmt, ist ein weitgehend kraftfreies Arbeiten auch mit Blasgeräten mit sehr hoher Blasleistung möglich. Die Belastung des Handgelenks eines Bedieners, über das die Rückstoßkraft üblicherweise aufgenommen wird, ist deutlich verringert.

Vorteilhaft ist der horizontale Abstand der zweiten Befestigungsstelle zur Längsmittelachse des Blasrohrs möglichst klein. Dadurch kann ein Schwenken des Blasgeräts beim Starten bzw. beim Abstellen des Gebläses vermindert werden. Eine vorteilhafte Anordnung ergibt sich, wenn die zweite Befestigungsstelle und die Längsmittelachse des Blasrohrs in der gemeinsamen vertikalen Ebene liegen, in der auch der Schwerpunkt liegt. Dadurch ergibt sich eine vorteilhafte Ausrichtung des Blasgeräts. Ist das Blasgerät an der zweiten Befestigungsstelle schwenkbar gelagert, so liegen die Längsmittelachse des Blasrohrs und die zweite Befestigungsstelle in Ruhelage des Blasgeräts der gemeinsamen vertikalen Ebene, also wenn am Blasgerät keine äußeren Kräfte wirken, das Blasgerät also nicht in Betrieb ist und der Bediener das Blasgerät nicht aus seiner Ruhelage heraus verschwenkt. Durch die Anordnung der Längsmittelachse des Blasrohrs in der Ebene, in der die zweite Befestigungsstelle und der Schwerpunkt des Arbeitsgeräts liegen, müssen vom Bediener im Betrieb nur sehr geringe Kräfte zum Halten und Führen des Blasgeräts aufgewendet werden. Eine ergonomische Anordnung ergibt sich, wenn die zweite Befestigungsstelle bezogen auf den Bediener hinter dem Schwerpunkt des Arbeitsgeräts liegt. Bei Anordnung der zweiten Befestigungsstelle hinter dem Schwerpunkt des Arbeitsgeräts muss der Bediener allerdings einen Teil der Gewichtskraft selbst tragen.

Vorteilhaft besitzt das Arbeitsgerät in Arbeitslage zu der Halterung einen bezogen auf den Bediener in seitlicher Richtung gemessenen Abstand. Dadurch, dass das Arbeitsgerät an der Halterung einen seitlichen Abstand besitzt und nicht an der Halterung anliegt, kann das Arbeitsgerät im Betrieb frei geschwenkt werden, ohne dass die Schwenkbewegung von der Halterung behindert wird. Vorteilhaft ist die Verbindungseinrichtung an der zweiten Befestigungsstelle um eine vertikale Schwenkachse schwenkbar gelagert. Die Schwenkbarkeit um die vertikale Schwenkachse erlaubt ein Schwenken des Arbeitsgeräts in einer horizontalen Ebene. Vorteilhaft ist vorgesehen, dass die Verbindungseinrichtung an der zweiten Befestigungsstelle um eine horizontale Schwenkachse schwenkbar gelagert ist. Dadurch wird eine vertikale Schwenkbewegung des Arbeitsgeräts ermöglicht. Eine einfache Gestaltung ergibt sich, wenn die zweite Befestigungsstelle an einem Kugelgelenk ausgebildet ist.

Vorteilhaft ist vorgesehen, dass die Verbindungseinrichtung einen Verbindungsstift umfasst. Dadurch ergibt sich ein einfacher Aufbau. In Arbeitslage kragt der Verbindungsstift von der Halterung vorteilhaft etwa horizontal und bezogen auf den Bediener in seitlicher Richtung aus. Der Verbindungsstift ist dabei insbesondere in einer Gehäuseaufnahme des Arbeitsgeräts beweglich angeordnet. Die Verbindungseinrichtung weist vorteilhaft Mittel zur Zentrierung des Verbindungsstifts in der Gehäuseaufnahme auf. Dies ist insbesondere dann vorteilhaft, wenn die Verbindungseinrichtung an einer Befestigungsstelle, insbesondere an der ersten Befestigungsstelle, lösbar ausgebildet ist. Die Zentrierung des Verbindungsstifts vereinfacht die Fixierung des Verbindungsstifts in einer Aufnahme der Halterung.

Handgeführte Arbeitsgeräte werden von rechthändigen Bedienern üblicherweise an der rechten Körperseite getragen, während linkshändige Bediener oft ein Tragen an der linken Körperseite bevorzugen. Um eine Anordnung des Arbeitsgeräts sowohl an der rechten Körperseite als auch an der linken Körperseite zu ermöglichen, ist vorteilhaft vorgesehen, dass der Verbindungsstift auf gegenüberliegenden Seiten aus dem Gehäuse ragen kann. Der Verbindungsstift kann dabei dauerhaft auf beiden Seiten des Gehäuses aus dem Gehäuse ragen. Es kann jedoch auch vorteilhaft sein, dass der Verbindungsstift jeweils nur auf einer Gehäuseseite aus dem Gehäuse ragt und auf der gegenüberliegenden Gehäuseseite nicht aus dem Gehäuse hervorsteht. Dadurch wird vermieden, dass der Bediener durch einen Verbindungsstift, der auf der dem Bediener abgewandten Gehäuseseite aus dem Gehäuse ragt, behindert wird.

Um ein Arbeiten mit dem Arbeitsgerät auch ohne die Abstützvorrichtung zu ermöglichen, ist vorteilhaft vorgesehen, dass die Verbindung zwischen dem Arbeitsgerät und der Halterung an mindestens einer Befestigungsstelle lösbar ist. Je nach Gestaltung der Verbindungseinrichtung kann die Verbindung dabei an der ersten Befestigungsstelle oder an der zweiten Befestigungsstelle lösbar sein. Es kann auch vorgesehen sein, dass die Verbindungseinrichtung selbst trennbar ausgebildet ist.

Eine einfache Gestaltung ergibt sich, wenn die Halterung eine Aufnahme für die Verbindungseinrichtung besitzt, wobei die Verbindungseinrichtung eine an der ersten Befestigungsstelle angeordnete Platte umfasst, die mindestens eine Schiene der Aufnahme hintergreift. Die Halterung ist an einer Rückentraganordnung ausgebildet. An der Rückentraganordnung ist vorteilhaft eine Energiespeichereinheit gehalten, die über eine Energieleitung mit dem Arbeitsgerät verbunden ist. Vorteilhaft ist die Energiespeichereinheit ein Akku und die Energieleitung ein Kabel. Auch eine andere Energiespeichereinheit, beispielsweise ein Kraftstoff- oder Gastank kann jedoch vorteilhaft sein. Die Energieleitung ist dann eine Kraftstoffleitung oder eine Gasleitung. Der Antriebsmotor des Arbeitsgeräts ist in dem Blasgerät selbst angeordnet und nicht an der Rückentraganordnung. Dadurch kann das Arbeitsgerät von der Rückentraganordnung gelöst werden und ist nur über die Energieleitung mit der Rückentraganordnung verbunden, die eine hohe Flexibilität aufweist.

Für ein Verfahren zum Betrieb eines Arbeitsgeräts, insbesondere eines Blasgeräts, das über eine Verbindungseinrichtung mit einer vom Bediener zu tragenden Halterung verbunden ist, wobei die Verbindungseinrichtung das Arbeitsgerät in Arbeitslage bezogen auf den Bediener nach hinten abstützt und eine Bewegung des Arbeitsgeräts nach hinten verhindert, wobei das Blasgerät Mittel zur Detektion, ob das Blasgerät mit der Halterung über die Verbindungseinrichtung verbunden ist oder nicht, umfasst, ist vorgesehen, dass detektiert wird, ob das Blasgerät von der Halterung getrennt wird, und dass die zum Antrieb des Arbeitsgeräts maximal zur Verfügung gestellte Leistung im Vergleich zu der zum Antrieb des Arbeitsgeräts maximal zur Verfügung stehenden Leistung, wenn das Arbeitsgerät mit der Halterung verbunden ist, verringert wird, wenn erkannt wird, dass das Arbeitsgerät von der Halterung getrennt wird.

Das Verfahren zum Betrieb eines Arbeitsgeräts stellt einen eigenständigen, von der Gestaltung der Verbindungseinrichtung unabhängigen erfinderischen Gedanken dar.

Die Verringerung der maximal, also bei maximal gedrücktem Bedienelement, zur Verfügung gestellten Leistung bewirkt eine Verringerung der Rückstoßkraft. Dadurch kann auf einfache Weise die vom Bediener im Betrieb aufzuwendende Kraft verringert werden. Durch die Verringerung der maximal zur Verfügung gestellten Leistung wird verhindert, dass der Bediener das Bedienelement dauerhaft in einer teilweise gedrückten Stellung halten muss. Dadurch wird die Bedienung vereinfacht und die Ergonomie bei der Bedienung erhöht.

Für ein handgeführtes Arbeitsgerät mit einer Befestigungseinrichtung, wobei das Arbeitsgerät ein Gehäuse besitzt, in dem eine Antriebseinheit des Arbeitsgeräts angeordnet ist, und an dem mindestens ein Handgriff zum Führen des Arbeitsgeräts im Betrieb angeordnet ist, wobei das Arbeitsgerät eine Verbindungseinrichtung umfasst, die aus dem Gehäuse ragt und die an einer Befestigungsstelle um mindestens eine Schwenkachse schwenkbar gelagert ist, ist vorgesehen, dass die Befestigungsstelle und der Schwerpunkt des Arbeitsgeräts in Arbeitslage des Arbeitsgeräts in einer gemeinsamen vertikalen Ebene liegen, wobei die gemeinsame vertikale Ebene in Längsrichtung des Arbeitsgeräts ausgerichtet ist, und wobei die Verbindungseinrichtung von dem Gehäuse etwa horizontal und bezogen auf einen Bediener in seitlicher Richtung auskragt. Die etwa horizontal und bezogen auf den Bediener in seitlicher Richtung auskragende Verbindungseinrichtung erlaubt eine Verbindung des Arbeitsgeräts mit einer Halterung, die das aufgrund des Abstands zwischen dem Schwerpunkt und der Halterung hervorgerufene Kippmoment mindestens teilweise, vorteilhaft vollständig aufnimmt. Dadurch ist ein einfacher, weitgehend kraftfreier Betrieb des Arbeitsgeräts möglich. Die Anordnung der Befestigungsstelle und des Schwerpunkts in der gemeinsamen vertikalen Ebene führt dazu, dass das Arbeitsgerät in seitlicher Richtung ausbalanciert ist, so dass der Bediener in seitlicher Richtung keine Kräfte und Momente abfangen muss. Dadurch wird ein kräftearmes Arbeiten ermöglicht.

Ausführungsbeispiele der Erfindung werden im Folgenden anhand der Zeichnung erläutert. Es zeigen:
- Fig. 1: eine schematische Seitenansicht eines Blasgeräts,
- Fig. 2: eine Schnittdarstellung durch das Blasgerät aus Fig. 1,
- Fig. 3: eine schematische Darstellung einer nicht erfindungsgemäßen Anordnung eines Blasgeräts und einer Abstützvorrichtung an einem Bediener,
- Fig. 4 und 5: perspektivische Darstellungen des Blasgeräts mit der Abstützvorrichtung,
- Fig. 6: eine ausschnittsweise perspektivische Darstellung des Blasgeräts im Bereich der Verbindungseinrichtung,
- Fig. 7: einen Schnitt durch das Blasgerät und die Abstützvorrichtung,
- Fig. 8: eine perspektivische Darstellung der Halterung der Abstützvorrichtung,
- Fig. 9: eine vergrößerte ausschnittsweise Darstellung der Verbindungseinrichtung aus Fig. 7,
- Fig. 10: eine Darstellung entsprechend Fig. 9 ohne die Halterung,
- Fig. 11: eine Schnittdarstellung der Verbindungseinrichtung in einem in das Gehäuse eingedrückten Zustand,
- Fig. 12: eine Schnittdarstellung eines Ausführungsbeispiels einer Verbindungseinrichtung,
- Fig. 13: eine perspektivische Darstellung eines nicht erfindungsgemäßen Ausführungsbeispiels eines Blasgeräts,
- Fig. 14: das Blasgerät aus Fig. 13 in Seitenansicht,
- Fig. 15: eine perspektivische Darstellung eines weiteren nicht erfindungsgemäßen Ausführungsbeispiels eines Blasgeräts,
- Fig. 16: das Blasgerät aus Fig. 15 in Seitenansicht,
- Fig. 17: eine schematische perspektivische Darstellung eines Blasgeräts mit einer Abstützvorrichtung an einem Bediener,
- Fig. 18: die Anordnung aus Fig. 17 bei getrennter Verbindungseinrichtung,
- Fig. 19: eine schematische perspektivische Darstellung der zweiten Befestigungsstelle der Verbindungseinrichtung,
- Fig. 20: eine schematische perspektivische Darstellung eines Ausführungsbeispiels eines Blasgeräts mit einer Abstützvorrichtung an einem Bediener,
- Fig. 21: eine schematische perspektivische Ansicht auf die Rückentrage aus Fig. 20 von unten,
- Fig. 22: eine schematische Seitenansicht eines Ausführungsbeispiels eines Blasgeräts mit einer Abstützvorrichtung,
- Fig. 23: eine schematische Explosionsdarstellung der Abstützvorrichtung aus Fig. 22,
- Fig. 24: eine schematische perspektivische Darstellung eines Ausführungsbeispiels eines Blasgeräts mit einer Abstützvorrichtung,
- Fig. 25: eine schematische Darstellung der zweiten Befestigungsstelle der Anordnung aus Fig. 24,
- Fig. 26: eine schematische perspektivische Darstellung eines weiteren Ausführungsbeispiels eines Blasgeräts mit einer Abstützvorrichtung,
- Fig. 27: eine schematische Seitenansicht eines weiteren Ausführungsbeispiels eines Blasgeräts mit einer Abstützvorrichtung,
- Fig. 28: eine schematische vergrößerte Seitenansicht des Blasgeräts aus Fig. 27,
- Fig. 29: eine schematische Darstellung eines Verbindungselements der Verbindungseinrichtung aus Fig. 27,
- Fig. 30: eine schematische Schnittdarstellung des Blasgeräts aus Fig. 27,
- Fig. 31: eine schematische Ansicht auf die Luftansaugöffnung des Blasgeräts aus Fig. 27,
- Fig. 32: eine schematische Seitenansicht einer Ausführungsvariante für die Ansaugöffnung und eine Verbindungseinrichtung,
- Fig. 33: eine schematische Darstellung der Anbindung der Verbindungseinrichtung an der Ansaugöffnung in vergrößerter Darstellung,
- Fig. 34 und: 35 schematische Seitenansichten einer Befestigungsplatte,
- Fig. 36: eine Gegenplatte zu der Befestigungsplatte aus den Figuren 34 und 35 in schematischer Seitenansicht,
- Fig. 37: eine schematische Seitenansicht eines Ausführungsbeispiels eines Blasgeräts,
- Fig. 38: die zweite Befestigungsstelle des Blasgeräts aus Fig. 37 in teilgeschnittener, vergrößerter, schematischer Darstellung,
- Fig. 39: eine schematische perspektivische Darstellung der Verbindungseinrichtung,
- Fig. 40: eine schematische perspektivische Darstellung eines Ausführungsbeispiels eines Blasgeräts mit einer Abstützvorrichtung,
- Fig. 41: eine schematische Schnittdarstellung durch die zweite Befestigungsstelle des Blasgeräts aus Fig. 40,
- Fig. 42: eine schematische perspektivische Darstellung eines weiteren Ausführungsbeispiels eines Blasgeräts mit einer Abstützvorrichtung,
- Fig. 43: eine schematische Darstellung eines Teilschnitts durch das Blasgerät aus Fig. 42,
- Fig. 44: eine schematische Darstellung einer Ausführungsvariante für die zweite Befestigungsstelle.

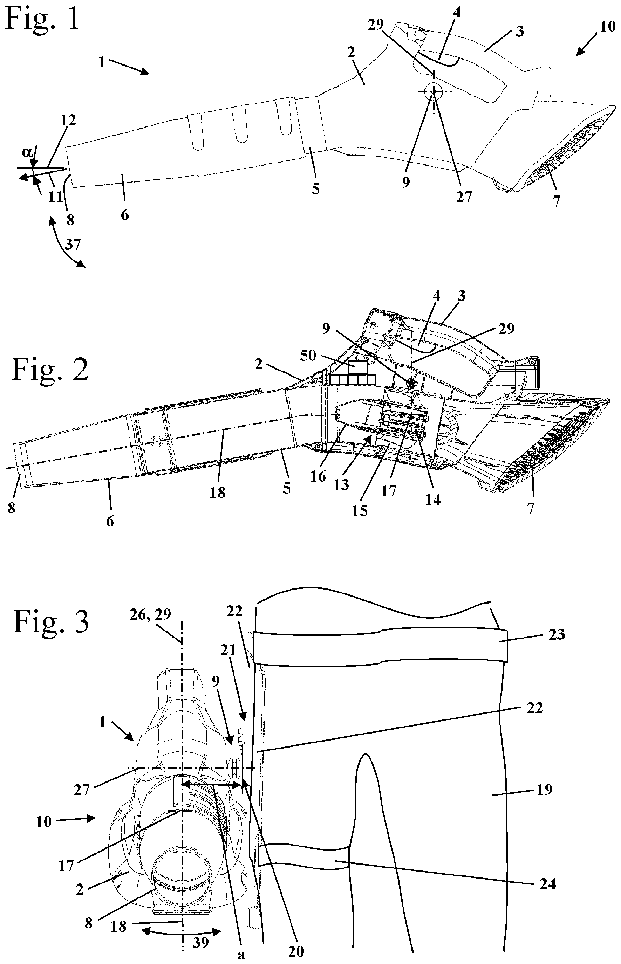

Fig. 1 zeigt als Ausführungsbeispiel für ein handgeführtes Arbeitsgerät ein handgeführtes, handgetragenes Blasgerät 1. Das Arbeitsgerät kann jedoch auch ein Freischneider oder dgl. sein. Das Blasgerät 1 besitzt ein Gehäuse 2, an dem ein Handgriff 3 angeordnet ist. Am Handgriff 3 ist ein Bedienhebel 4 schwenkbar gelagert. Am Gehäuse 2 ist ein Blasrohr 5 ausgebildet, durch das eine im Gehäuse 2 angeordnete Gebläseeinheit 13 (Fig. 2) einen Blasluftstrom fördert. Auf das Blasrohr 5 ist im Ausführungsbeispiel eine Düse 6 aufgesteckt. Die Düse 6 ist vorteilhaft auswechselbar, so dass ein Bediener zur Anpassung an den vorgesehenen Einsatz des Blasgeräts 1 eine Düse 6 mit der gewünschten Düsenform aufstecken kann. An der Düse 6 ist eine Ausblasöffnung 8 ausgebildet, durch die der Blasluftstrom das Blasgerät 1 in einer Ausblasrichtung 11 verlässt.

Fig. 1 zeigt das Blasgerät 1 in einer Arbeitslage 10. In der Arbeitslage 10 ist die Ausblasrichtung 11 gegenüber einer Horizontalen 12 um einen Ausblaswinkel α nach unten geneigt. Der Ausblaswinkel α kann beispielsweise von etwa 10° bis etwa 70° betragen. Im Betrieb schwenkt der Bediener das Blasgerät 1 in vertikaler Richtung, wie durch den Doppelpfeil 37 angedeutet ist, so dass sich die Ausblasrichtung 11 ändert und der Blasluftstrom auf das wegzublasende Gut gerichtet werden kann. Der Blasluftstrom wird im Betrieb über eine Ansaugöffnung 7 angesaugt, die in Arbeitslage 10 seitlich hinter einem Bediener 19 (Fig. 3) liegt. Die Ausblasöffnung 8 ist bezogen auf den Bediener 19 nach vorne gerichtet.

Das Blasgerät 1 besitzt eine Verbindungseinrichtung 9, die zur Anbindung an eine Halterung 21 (Fig. 3) an einem Bediener 19 dient. An der Verbindungseinrichtung 9 ist das Blasgerät 1 um eine in Arbeitslage 10 horizontal verlaufende Schwenkachse 27 schwenkbar, wie im Folgenden noch näher erläutert wird.

Fig. 2 zeigt den Aufbau des Blasgeräts 1 im Einzelnen. Die Gebläseeinheit 13 umfasst einen Antriebsmotor 14, der mindestens ein nicht gezeigtes Lüfterrad rotierend antreibt. Im Ausführungsbeispiel ist der Antriebsmotor 14 im Blasrohr 5 angeordnet. Zwischen dem Antriebsmotor 14 und dem Blasrohr 5 ist ein Ringraum gebildet, durch den das Lüfterrad den Arbeitsluftstrom fördert. Es können mehrere Lüfterräder vorteilhaft sein. Die Gebläseeinheit besitzt im Ausführungsbeispiel ein nicht rotierendes Leitrad 15. Stromab des nicht gezeigten Lüfterrads und des Leitrads 15 ist ein Leitelement 16 vorgesehen, das näherungsweise als abgerundeter Kegel ausgebildet ist und an dessen

Außenumfang sich der Ringraum verbreitert. Die Gebläseeinheit 13 fördert den Blasluftstrom in Richtung einer Längsmittelachse 18 des Blasrohrs 5. Die Gebläseeinheit 13 ist im Ausführungsbeispiel als Axialgebläse ausgebildet. Auch eine Ausbildung als Diagonalgebläse kann jedoch vorteilhaft sein. Die Einströmrichtung in das Gebläse und die Ausströmrichtung aus dem Gebläse verlaufen dabei etwa in der gleichen Richtung.

Zur Steuerung des Antriebsmotors 14 dient eine im Gehäuse 2 angeordnete Steuerung 50. Stromab des Leitelements 16 verläuft das Blasrohr 5 in Arbeitslage 10 leicht nach unten gebogen, während die Düse 6 im Ausführungsbeispiel gerade ausgebildet ist.

Das Blasgerät 1 besitzt einen Schwerpunkt 17, der im Ausführungsbeispiel im Bereich des Antriebsmotors 14 liegt. Auch eine andere Lage des Schwerpunkts 17 kann vorteilhaft sein. Für unterschiedliche Düsen 6 können sich dabei unterschiedliche Lagen des Schwerpunkts 17 ergeben. Das Blasgerät 1 ist so ausgebildet, dass der Schwerpunkt 17 in Arbeitslage 10 unter dem Handgriff 3 liegt. Dadurch muss der Bediener im Betrieb höchstens ein geringes Kippmoment um die horizontale Schwenkachse 27 (Fig. 1) oder eine in Längsrichtung des Blasgeräts 1 verlaufende Schwenkachse aufnehmen. Die Verbindungseinrichtung 9 besitzt außerdem eine vertikale Schwenkachse 29, die ebenfalls durch den Schwenkpunkt 17 geht und den Handgriff 3 schneidet.

Fig. 3 zeigt schematisch eine Anordnung des Blasgeräts 1 an einem Bediener 19. Das Blasgerät 1 ist über eine Abstützvorrichtung 20 am Bediener 19 abgestützt. Die Abstützvorrichtung 20 umfasst eine Halteplatte 22, die im Ausführungsbeispiel über einen Hüftgurt 23 und einen Beingurt 24 vom Bediener getragen ist. Auch eine andere Anbindung der Halteplatte 22 kann vorteilhaft sein, beispielsweise ausschließlich über einen Hüftgurt oder an einer Gurtanordnung, die auch Schultergurte und/oder weitere Gurte umfasst. An der Halteplatte 22 ist die Halterung 21 ausgebildet, an der die Verbindungseinrichtung 9 gehalten ist. Wie Fig. 3 zeigt, ist die vertikale Schwenkachse 29 in einer vertikalen Ebene 26 angeordnet, die die Längsmittelachse 18 des Blasrohrs 5 (Fig. 2) enthält. Die vertikale Ebene 26 besitzt in Arbeitslage 10 zur Halterung 21 einen in horizontaler Richtung und bezogen auf den Bediener in seitlicher Richtung gemessenen Abstand a. Dadurch hängt das Blasgerät 1 im Betrieb neben dem Bediener 19. Das Blasgerät 1 stützt sich ausschließlich über die Halterung 21 und die Halteplatte 22 am Bediener 19 ab. Das Gehäuse 2 des Blasgeräts 1 liegt dabei nicht an der Halteplatte 22 an. Die Abstützung erfolgt ausschließlich über die Verbindungseinrichtung 9.

In Fig. 3 ist auch die horizontale Schwenkachse 27 gezeigt. Der Abstand a ist parallel zur horizontalen Schwenkachse 27 gemessen. Vorteilhaft liegt der Schwerpunkt 17 nahe der vertikalen Ebene 26, die die Längsmittelachse 18 des Blasrohrs 5 enthält. Im Ausführungsbeispiel liegt der Schwerpunkt 17 in der vertikalen Ebene 26. Im Betrieb schwenkt der Bediener 19 das Blasgerät 1 auch um die vertikale Schwenkachse 29. Dabei bewegt sich die Ausblasöffnung 8 nach rechts und links, wie durch den Doppelpfeil 39 angedeutet ist. Aufgrund des Abstands a können die Schwenkbewegungen in Richtung der Doppelpfeile 37 und 39 ohne Beeinträchtigung der Bewegung durch die Halteplatte 22 ausgeführt werden.

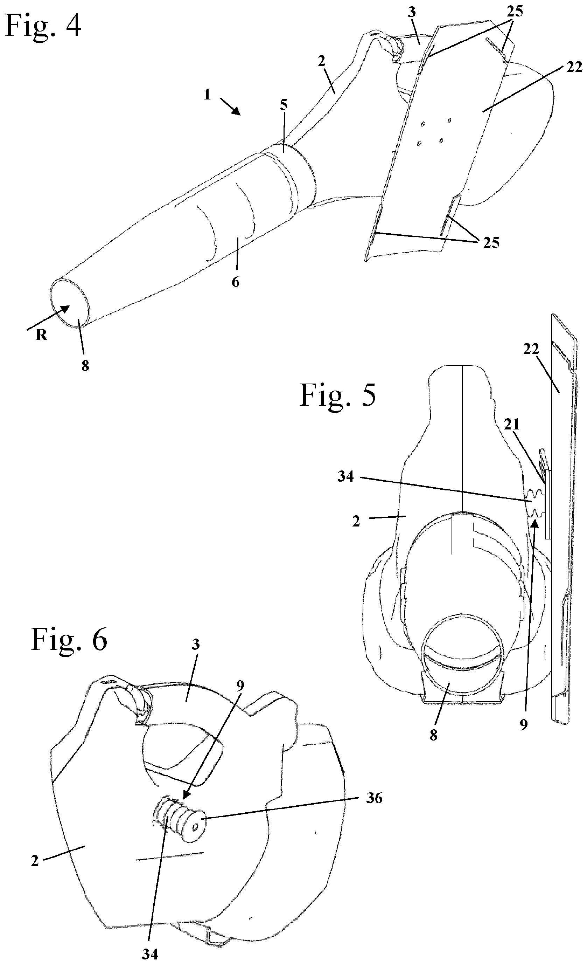

Wie Fig. 4 zeigt, besitzt die Halteplatte 22 Schlitze 25 zur Fixierung des Hüftgurts 23 und des Beingurts 24. In Fig. 4 ist auch schematisch die Rückstoßkraft R eingezeichnet, die ein im Betrieb aus der Ausblasöffnung 8 austretender Blasluftstrom auf das Blasgerät 1 ausübt. Die Rückstoßkraft R wird im Betrieb vollständig über die Verbindungseinrichtung 9 aufgenommen und in die Halterung 21 und die Halteplatte 22 abgeleitet. Die Rückstoßkraft R wird dadurch vom Bein des Bedieners 19 aufgenommen und nicht über eine am Handgriff 3 angeordnete Hand. Dadurch wird die Belastung des Bedieners insbesondere im Handgelenk gering gehalten.

Wie Fig. 5 zeigt, umfasst die Verbindungseinrichtung 9 einen Balg 34, der im Folgenden noch näher beschrieben wird. Wie Fig. 6 zeigt, ist an dem aus dem Gehäuse 2 ragenden Ende des Balgs 34 eine Platte 36 angeordnet.

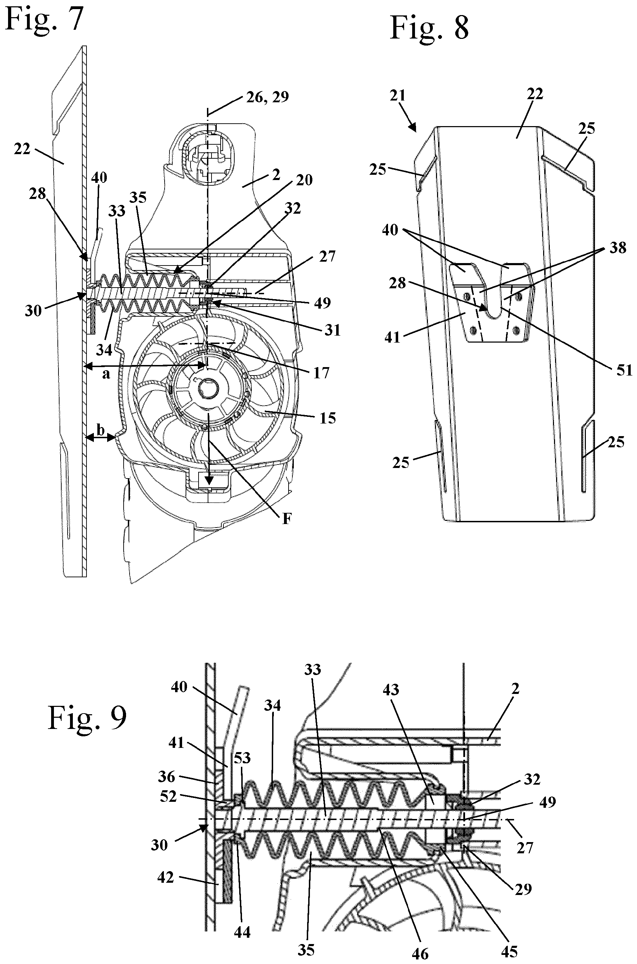

Die Schnittdarstellung in Fig. 7 zeigt den Aufbau im Einzelnen. Die Verbindungseinrichtung 9 umfasst einen Verbindungsstift 33, der an einer ersten Befestigungsstelle 30 an der Halteplatte 22 und an einer zweiten Befestigungsstelle 31 am Blasgerät 1 festgelegt ist. Die erste Befestigungsstelle 30 wird von einer Aufnahme 28 an der Halteplatte 22 gebildet. Wie Fig. 7 auch zeigt, sind oberhalb der Aufnahme 28 Einführhilfen 40 vorgesehen, die als schräg von der Halteplatte 22 abstehende Blechabschnitte ausgebildet sind, wie auch Fig. 8 zeigt. An der zweiten Befestigungsstelle 31 ist ein Kugelgelenk 32 vorgesehen, mit dem das Blasgerät 1 gegenüber dem Verbindungsstift 33 schwenkbar gelagert ist. Das Kugelgelenk 32 lässt dabei Schwenkbewegungen um die vertikale Schwenkachse 29 und um die horizontale Schwenkachse 27 zu. Auch ein Verkippen des Blasgeräts 1 um eine etwa parallel zur Längsmittelachse 18 (Fig. 2) und durch das Kugelgelenk 32 verlaufende Achse 49 ist über einen geringen Winkelbereich möglich.

Wie Fig. 7 zeigt, ist der Verbindungsstift 33 von dem Balg 34 umgeben. Der Verbindungsstift 33 ragt in eine Gehäuseaufnahme 35, die als Vertiefung im Gehäuse 2 ausgebildet ist. Am Boden der Gehäuseaufnahme 35 ist das Kugelgelenk 32 vorgesehen. Die zweite Befestigungsstelle 31 ist mittig im Gehäuse 2 vorgesehen und liegt gemeinsam mit dem Schwerpunkt 17 auf der vertikalen Schwenkachse 29. Die zweite Befestigungsstelle 31 liegt mit dem Schwerpunkt 17 in der vertikalen Ebene 26 und nahe an der Längsmittelachse 18 des Blasrohrs 5 (Fig. 3). Im Ausführungsbeispiel liegt die Längsmittelachse 18 in der vertikalen Ebene 26. Der Balg 34 bewirkt eine Zentrierung des Verbindungsstifts 33 in der Gehäuseaufnahme 35. Dadurch ragt der Verbindungsstift 33 etwa senkrecht zur vertikalen Ebene 26 aus dem Gehäuse 2 des Blasgeräts 1.

Wie Fig. 7 zeigt, besitzt die vertikale Ebene 26 zur Halteplatte 22 den Abstand a. Der Abstand a ist senkrecht zur vertikalen Ebene 26 gemessen. Das Blasgerät 1 ist in einem konstruktiv vorgegebenen Winkelbereich frei schwingend am Kugelgelenk 32 gehalten. Wie Fig. 7 zeigt, besitzt das Gehäuse 2 des Blasgeräts 1 zur Halteplatte 22 einen seitlichen Abstand b und berührt die Halteplatte 22 in Arbeitslage 10 nicht. Der Abstand b ist so gewählt, dass sich eine ausreichende Beweglichkeit des Blasgeräts 1 im Betrieb ergibt. Der Abstand a beträgt vorteilhaft von etwa 5 cm bis etwa 15 cm, insbesondere von etwa 7 cm bis etwa 11 cm. Als besonders vorteilhaft hat sich ein Abstand a von etwa 10 cm herausgestellt. Fig. 7 zeigt auch die Gewichtskraft F des Blasgeräts, die vom Schwerpunkt 17 senkrecht nach unten wirkt. Die Gewichtskraft F übt an der ersten Befestigungsstelle 30 ein Kippmoment aus. Dieses Kippmoment wird von der Aufnahme 28 vollständig aufgenommen.

Die Aufnahme 28 ist, wie Fig. 8 zeigt, im Ausführungsbeispiel als Blech 41 ausgebildet, das einen etwa vertikalen Schlitz 51 für den Verbindungsstift 33 besitzt. Das Blech 41 ist mit Abstand zur Halteplatte 22 an der Halteplatte 22 fixiert. Im Ausführungsbeispiel sind hierzu Unterlegbleche 42, die in Fig. 9 gezeigt sind, zwischen der Halteplatte 22 und dem Blech 41 unterlegt. Die den Schlitz 51 begrenzenden Kanten des Blechs 41 bilden seitliche Schienen 38, hinter denen die Platte 36 geführt ist. Aufgrund der vergleichsweise großen Erstreckung der Platte 36 in vertikaler Richtung wird das von der Gewichtskraft F an der ersten Befestigungsstelle 30 ausgeübte Kippmoment von der Platte 36 in die Schienen 38 und so in die Halteplatte 22 eingeleitet. Die Platte 36 ist dabei fest und bei den im Betrieb üblicherweise wirkenden Kräften unbeweglich mit dem Verbindungsstift 33 verbunden. Dadurch wird die Gewichtskraft F des Arbeitsgeräts an der ersten Befestigungsstelle 30 abgestützt.

Fig. 9 zeigt die Gestaltung der Verbindungseinrichtung 9 im Einzelnen. Der Balg 34 besitzt ein erstes Ende 44, das zwischen einem Bund 52 an der Platte 36 und einer Verdickung 53 des Verbindungsstifts 33 gehalten ist. Das erste Ende 44 des Balgs 34 ist dabei in einem geringen Abstand zur Platte 36 gehalten, so dass das Blech 41 zwischen das erste Ende 44 des Balgs 34 und die Platte 36 eingreifen kann. Ein zweites Ende 45 des Balgs 34 ist am Gehäuse 2 an seinem Außenumfang gehalten. Das zweite Ende 45 wird von einem im Balg 34 angeordneten Ring 43 gegen die Wand des Gehäuses 2 gedrückt. Wie Fig. 9 auch zeigt, besitzt der Verbindungsstift 33 einen Absatz 46, an dem sich der Durchmesser des Verbindungsstifts 33 in Richtung auf die erste Befestigungsstelle 30 vergrößert. Der Absatz 46 bildet einen Anschlag für den Verbindungsstift 33. Bis zum Absatz 46 kann der Verbindungsstift 33 in das Kugelgelenk 32 eingeschoben werden.

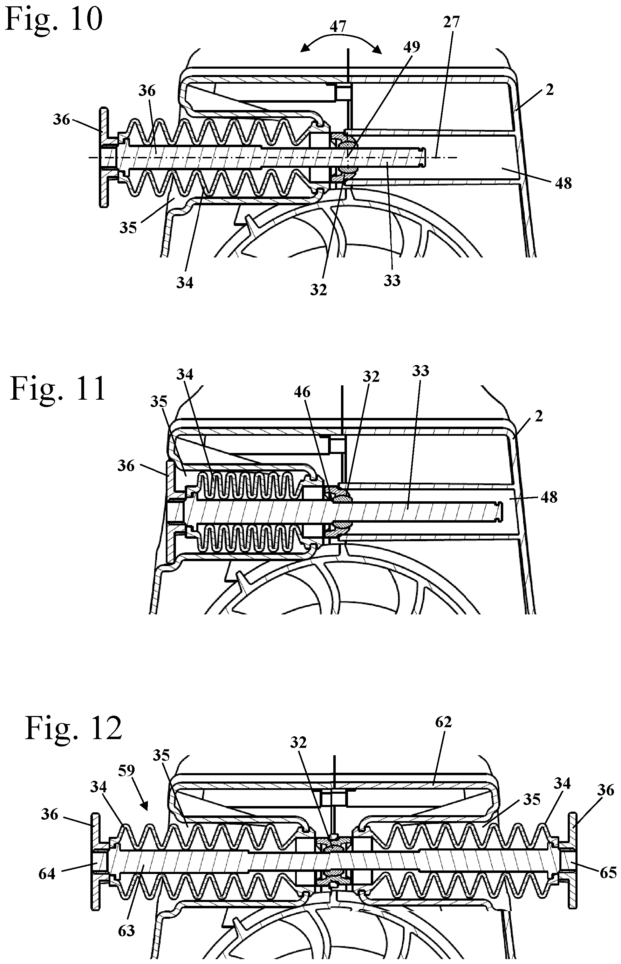

In Fig. 10 ist die Kippbewegung des Blasgeräts 1 um die Achse 49 durch einen Doppelpfeil 47 angedeutet. Wie die Figuren 10 und 11 zeigen, entspricht der Innendurchmesser der Gehäuseaufnahme 35 in der gezeigten vertikalen Schnittebene durch den Verbindungsstift 33 etwa dem Außendurchmesser des Balgs 34. Dadurch wird die Schwenkbewegung um die Achse 49 in Richtung des Doppelpfeils 47 vom Balg 34 begrenzt. Kippbewegungen um die Achse 49 sind nur möglich, soweit dies die Elastizität des Balgs 34 zulässt.

Wie Fig. 10 auch zeigt, ist im Gehäuse 2 an der der Platte 36 abgewandten Seite des Verbindungsstifts 33 ein Aufnahmeraum 48 ausgebildet. Wird die Verbindungseinrichtung 9 nicht benötigt, so kann der Verbindungsstift 33 in das Gehäuse 2 eingedrückt werden, bis die in Fig. 11 gezeigte Lage erreicht ist. Das freie Ende des Verbindungsstifts 33 ragt in den Aufnahmeraum 48. Der Balg 34 wird beim Einschieben des Verbindungsstifts 33 in das Gehäuse 2 zusammengedrückt. In der in das Gehäuse 2 eingedrückten Stellung schließt die Platte 36 etwa eben mit der Außenseite des Gehäuses 2 ab und verschließt in der in Fig. 11 gezeigten Schnittebene die Gehäuseaufnahme 35 weitgehend.

Fig. 12 zeigt ein Ausführungsbeispiel einer Verbindungseinrichtung 59, die einen Verbindungsstift 63 umfasst. Die Verbindungseinrichtung 59 ist an einem Blasgerät vorgesehen, das ein Gehäuse 62 besitzt. Der Aufbau des Blasgeräts entspricht dabei im Wesentlichen dem in den vorangegangenen Figuren gezeigten Blasgerät 1. Einander entsprechende Elemente sind in allen Figuren mit den gleichen Bezugszeichen bezeichnet. Das Gehäuse 62 in Fig. 12 besitzt zwei Gehäuseaufnahmen 35, die zu gegenüberliegenden Seiten des Gehäuses 62 hin offen sind. Der Verbindungsstift 63 durchragt das Gehäuse 62. Ein erstes, aus dem Gehäuse 62 ragendes Ende 64 des Verbindungsstifts 63 trägt eine Platte 36. Das auf der gegenüberliegenden Seite aus dem Gehäuse 62 ragende Ende 65 des Verbindungsstifts 63 trägt ebenfalls eine Platte 36. Dadurch kann der Verbindungsstift 63 sowohl an einer an der rechten Seite eines Bedieners 19 angeordneten Halterung 21 als auch an einer an einer linken Seite des Bedieners 19 angeordneten Halterung 21 angeordnet werden. Dadurch kann das Blasgerät aus Fig. 12 von Rechtshändern und Linkshändern gleichermaßen bedient werden. Es kann vorgesehen sein, dass der Verbindungsstift 63 nur auf einer Seite des Gehäuses 62 aus dem Gehäuse 62 ragt und dass der Verbindungsstift 63 in seiner Längsrichtung verschiebbar ist, so dass der Verbindungsstift 63 wahlweise auf der einen oder der anderen Gehäuseseite aus dem Gehäuse 62 ragt.

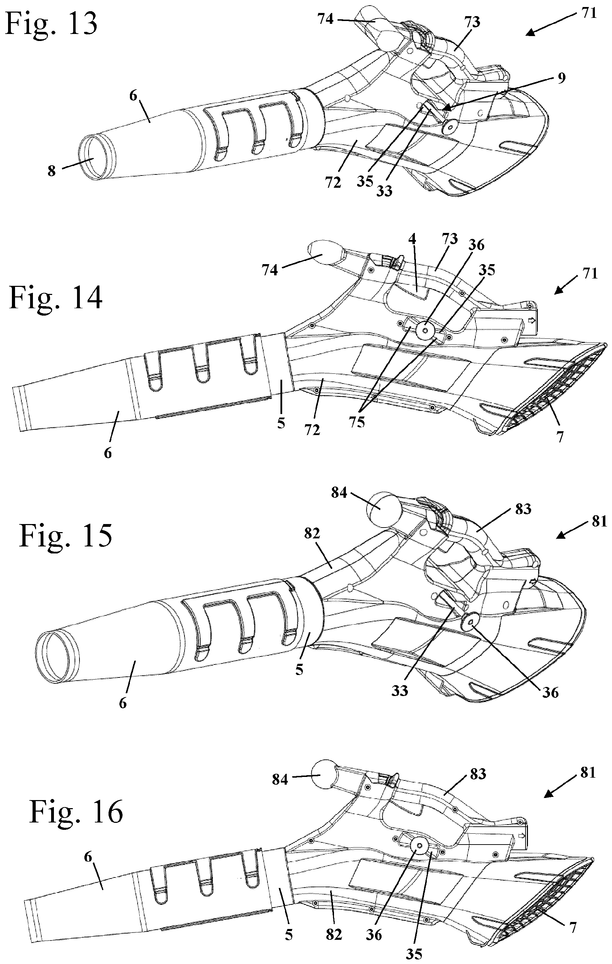

Die Figuren 13 und 14 zeigen ein Ausführungsbeispiel eines Blasgeräts 71, dessen Aufbau im Wesentlichen dem des Blasgeräts 1 entspricht. Auch die Gestaltung der Verbindungseinrichtung 9 entspricht der des Blasgeräts 1. Der Balg 34 ist in den Figuren nicht gezeigt. Wie Fig. 13 zeigt, besitzt das Blasgerät 71 ein Gehäuse 72, an dem ein Handgriff 73 angeordnet ist. An der nach vorne gewandten Seite des Handgriffs 73 ist am Gehäuse 72 ein Führungsknauf 74 angeordnet. Ist das Blasgerät 71 über die Abstützvorrichtung 20 an der Halteplatte 22 fixiert, so ist das Blasgerät 71 ausgependelt. Der Bediener kann das Blasgerät 71 dadurch am Führungsknauf 74 durch lediglich leichten Druck mit der Hand in horizontaler und vertikaler Richtung verschwenken und so den Blasluftstrom in die gewünschte Ausblasrichtung lenken. Dadurch ist auch bei einem Blasgerät 71 mit sehr hoher Blasleistung ein ermüdungsarmes Arbeiten möglich.

Die Figuren 13 und 14 zeigen auch die Gestalt der Gehäuseaufnahme 35. Die Gehäuseaufnahme 35 besitzt zwei Abschnitte 75, die etwa kreissegmentförmig ausgebildet sind. Ein Abschnitt 75 ragt von einer Mittellage des Verbindungsstifts 33 ausgehend in Arbeitslage 10 und bezogen auf einen Bediener, der das Blasgerät 71 trägt, nach vorne und ein anderer Abschnitt 75, der ebenfalls kreissegmentförmig ausgebildet ist, ragt nach hinten. Dadurch kann die Ausblasöffnung 1 des Blasgeräts 71 gegenüber dem Verbindungsstift 33 nach rechts und links verschwenkt werden. Die Gestalt der Gehäuseaufnahme 35 bestimmt dabei den möglichen Schwenkwinkel für das Blasgerät 71. Die Wände der Gehäuseaufnahme 35 bilden einen Anschlag für den in Fig. 13 und 14 nicht gezeigten Balg 34.

Die Figuren 15 und 16 zeigen ein Ausführungsbeispiel eines Blasgeräts 81, an dessen Gehäuse 82 ein Handgriff 83 sowie ein vor dem Handgriff 83 angeordneter Führungsknauf 84 vorgesehen ist. Während der Führungsknauf 74 eine abgeflachte Gestalt aufweist, ist der Führungsknauf 84 etwa kugelförmig ausgebildet.

Die Blasgeräte 1, 71 und 81 besitzen einen elektrischen Antriebsmotor 14. Zur Versorgung des Antriebsmotors 14 mit Energie kann ein Akku am Blasgerät 1, 71, 81 angeordnet sein. Um hohe Blasleistungen bei ausreichend langer Arbeitsdauer erreichen zu können, ist ein vergleichsweise großer Akku notwendig. Um ein übermäßig großes Gewicht des Blasgeräts 1, 71, 81 zu vermeiden, kann ein rückengetragener Akku vorgesehen sein, der über eine Energieleitung mit dem Blasgerät 1, 71, 81 verbunden ist.

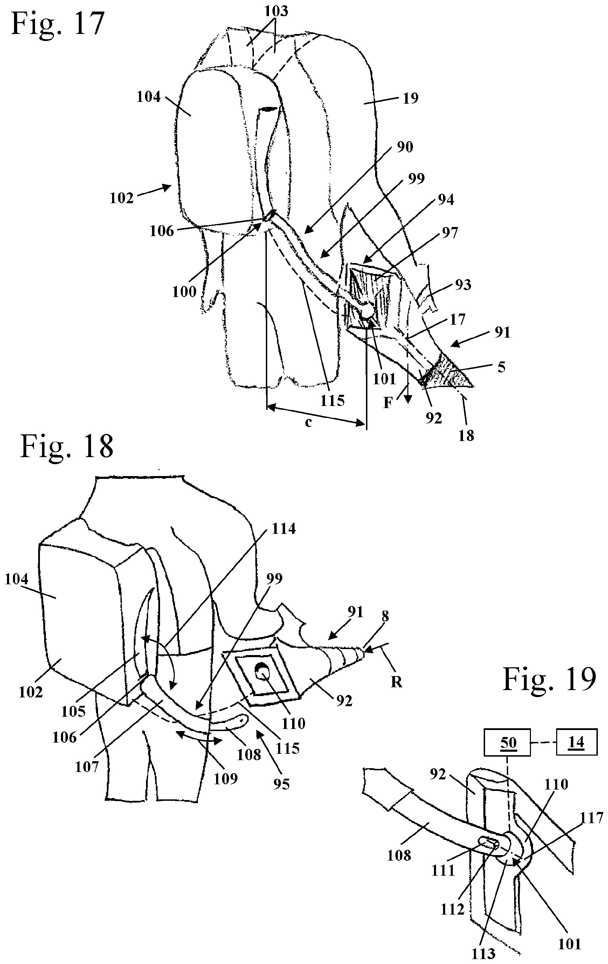

Fig. 17 zeigt ein Ausführungsbeispiel eines Blasgeräts 91, das über eine Abstützvorrichtung 90 mit einer Rückentraganordnung 102 verbunden ist. Das Blasgerät 91 besitzt ein Gehäuse 92, an dem ein Handgriff 93 vorgesehen ist. Der Handgriff 93 ist, wie auch die Handgriffe der Blasgeräte 1, 71, 81, an der Oberseite des Gehäuses 92 angeordnet und in Längsrichtung des Blasgeräts 91, also etwa parallel zur Längsmittelachse 18 des Blasrohrs 5 (Fig. 2) ausgerichtet. Am Handgriff 93 führt ein Bediener 19 das Blasgerät 91 im Betrieb. Der Handgriff 93 liegt etwa oberhalb des Schwerpunkts 17.

Die Rückentraganordnung 102 umfasst in Fig. 17 schematisch gezeigte Schultergurte 103, mit denen die Rückentraganordnung 102 vom Bediener auf dem Rücken getragen wird. An der Rückentraganordnung 102 ist eine in Fig. 17 schematisch gezeigte Energiespeichereinheit 104 vorgesehen. Die Energiespeichereinheit 104 ist vorteilhaft ein Akku. Die Energiespeichereinheit 104 ist über eine Energieleitung 115, insbesondere ein Stromkabel, mit dem Blasgerät 91 verbunden. Die Abstützvorrichtung 90 umfasst eine Verbindungseinrichtung 99, die an einer ersten Befestigungsstelle 100 an der Rückentraganordnung 102 und an einer zweiten Befestigungsstelle 101 am Blasgerät 91 fixiert ist. Die zweite Befestigungsstelle 101 ist dabei an einer Ansaugöffnung 97 des Blasgeräts 91 vorgesehen, die an der im Betrieb bezogen auf den Bediener 19 nach hinten gewandten Seite des Blasgeräts 91, also an der einer Ausblasöffnung abgewandten Seite des Blasgeräts 91, angeordnet ist. Die zweite Befestigungsstelle 101 liegt gemeinsam mit dem Schwerpunkt 17 in einer vertikalen Ebene, die die Längsmittelachse 18 des Blasrohrs 5 enthält. Die zweite Befestigungsstelle 101 ist gegenüber dem Schwerpunkt 17 nach hinten versetzt angeordnet. Die erste Befestigungsstelle 100 ist im Ausführungsbeispiel nach Fig. 17 an der dem Blasgerät 91 zugewandten Hochseite der Rückentraganordnung 102 angeordnet. Die erste Befestigungsstelle 100 besitzt zur zweiten Befestigungsstelle 101 einen in seitlicher Richtung und horizontal gemessenen Abstand c. Die Rückentraganordnung 102 bildet eine vom Bediener 18 getragene Halterung für die Verbindungseinrichtung 99.

Die Verbindungseinrichtung 99 ist als seitlich und schräg nach unten auskragendes Gestänge ausgebildet. An der ersten Befestigungsstelle 100 ist ein Schwenkgelenk 106 vorgesehen, mit dem die Verbindungseinrichtung 99 nach oben geklappt werden kann. Aus der in Fig. 17 gezeigten Stellung kann die Verbindungseinrichtung 99 jedoch nicht weiter nach unten geklappt werden. Dadurch kann die Verbindungseinrichtung 99 die Gewichtskraft F des Blasgeräts 91 teilweise und das aufgrund des seitlichen Abstands c zwischen dem Schwerpunkt 17 und der ersten Befestigungsstelle 100 hervorgerufene Kippmoment vollständig aufnehmen.

Fig. 17 zeigt die Anordnung in einem verbundenen Zustand, in dem das Blasgerät 91 über die Verbindungseinrichtung 99 mit der Rückentraganordnung 102 verbunden ist. In diesem Zustand nimmt die Verbindungseinrichtung 99 die von dem austretenden Blasluftstrom erzeugte Rückstoßkraft R (Fig. 18) sowie einen Teil der Gewichtskraft F und das von der Gewichtskraft F aufgrund des Abstands c erzeugte Kippmoment auf. Das Kippmoment, das aufgrund der Lage des Schwerpunkts 17 vor der zweiten Befestigungsstelle 101 ausgeübt wird, wird nicht von der Verbindungseinrichtung 99 aufgenommen, sondern muss vom Bediener 19 gehalten werden.

Fig. 18 zeigt die Anordnung in einem unverbundenen Zustand 95. In unverbundenem Zustand 95 ist das Blasgerät 91 nicht über die Verbindungseinrichtung 99 mit der Rückentraganordnung 102 verbunden. Es besteht lediglich eine Verbindung über die Energieleitung 115, über die keine Kräfte aufgenommen werden. Im Ausführungsbeispiel wird das Blasgerät 91 an der zweiten Verbindungsstelle 101 von der Verbindungseinrichtung 99 getrennt. Es kann jedoch auch vorgesehen sein, dass das Blasgerät 91 an der ersten Verbindungsstelle 100 von der Rückentraganordnung 102 getrennt wird und die Verbindungseinrichtung 99 am Blasgerät 91 fest gehalten ist.

Wie Fig. 18 zeigt, umfasst die Verbindungseinrichtung 99 einen ersten Abschnitt 107, der über das Schwenkgelenk 106 an der Rückentraganordnung 102 gehalten ist. Die Verbindungseinrichtung 99 umfasst außerdem einen zweiten Abschnitt 108, der teleskopartig in den ersten Abschnitt 107 einschiebbar ist, wie durch den Doppelpfeil 109 angedeutet. Dadurch lässt sich die Länge der Verbindungseinrichtung 99 und damit die Position der zweiten Befestigungsstelle 101 im Betrieb einstellen. Die Position der Abschnitte 107 und 108 zueinander ist vorteilhaft fixierbar, so dass auch die Gewichtskraft F von der Verbindungseinrichtung 99 teilweise aufgenommen wird.

Wie Fig. 18 zeigt, besitzt die Rückentraganordnung 102 eine Vertiefung 105 an der dem Blasgerät 91 zugewandten Hochseite. Die Verbindungseinrichtung 99 kann in unverbundenem Zustand 95 in eine Transportstellung überführt werden, indem der Abschnitt 108 in den Abschnitt 107 eingeschoben und anschließend der Abschnitt 107 nach oben geklappt wird, bis der Abschnitt 107 an der Rückentraganordnung 102 anliegt und mindestens teilweise in der Vertiefung 105 angeordnet ist. Das Hochklappen des Abschnitts 107 ist durch einen Doppelpfeil 114 angedeutet.

Wie Fig. 18 zeigt, besitzt das Gehäuse 92 des Blasgeräts 91 an der der Ausblasöffnung 8 abgewandten Seite eine Vertiefung 110, an der die zweite Befestigungsstelle 101 ausgebildet ist.

Wie die schematische Schnittdarstellung in Fig. 19 zeigt, ist die Vertiefung 110 etwa trichterförmig ausgebildet. An einer Seite der Vertiefung 110 ist ein Zapfen 112 vorgesehen, der in ein Langloch 111 des zweiten Abschnitts 108 ragt. An der zweiten Befestigungsstelle 101 ist der Zapfen 112 des Gehäuses 92 des Blasgeräts 91 gegenüber dem zweiten Abschnitt 108 der Verbindungseinrichtung 99 um eine horizontale Schwenkachse 117 schwenkbar. Der Zapfen 112 ist an einem Sensor 113 angeordnet, der erkennt, ob der zweite Abschnitt 108 am Zapfen 112 angeordnet ist oder nicht. Der Sensor 113 erkennt damit den verbundenen Zustand 94 und den unverbundenen Zustand 95. Der Sensor 113 ist mit der Steuerung 50 des Blasgeräts 91 verbunden. In dem in den Figuren 17 und 19 dargestellten verbundenen Zustand 94 steht für den Betrieb des Blasgeräts 91 die volle Antriebsleistung des Antriebsmotors 14 zur Verfügung. Wenn der Bediener den Bedienhebel 4 vollständig betätigt, wird die Gebläseeinheit 13 mit maximaler Blasleistung angetrieben. Erkennt der Sensor 113, dass der zweite Abschnitt 108 von dem Blasgerät 91 gelöst wird, so wird die maximal zum Antrieb der Gebläseeinheit 13 zur Verfügung gestellte Leistung verringert. Auch wenn der Bediener den Bedienhebel 4 vollständig betätigt, wird die Gebläseeinheit 13 nicht mit maximaler Leistung, sondern mit verringerter Leistung angetrieben. Dadurch wird die Rückstoßkraft R im unverbundenen Zustand 95 begrenzt und so die Belastung des Bedieners 19 im Betrieb verringert. Wird das Blasgerät 91 wieder über die Verbindungseinrichtung 99 mit der Rückentraganordnung 102 verbunden, so steht vorteilhaft wieder die maximale Leistung zum Antrieb der Gebläseeinheit 13 zur Verfügung.

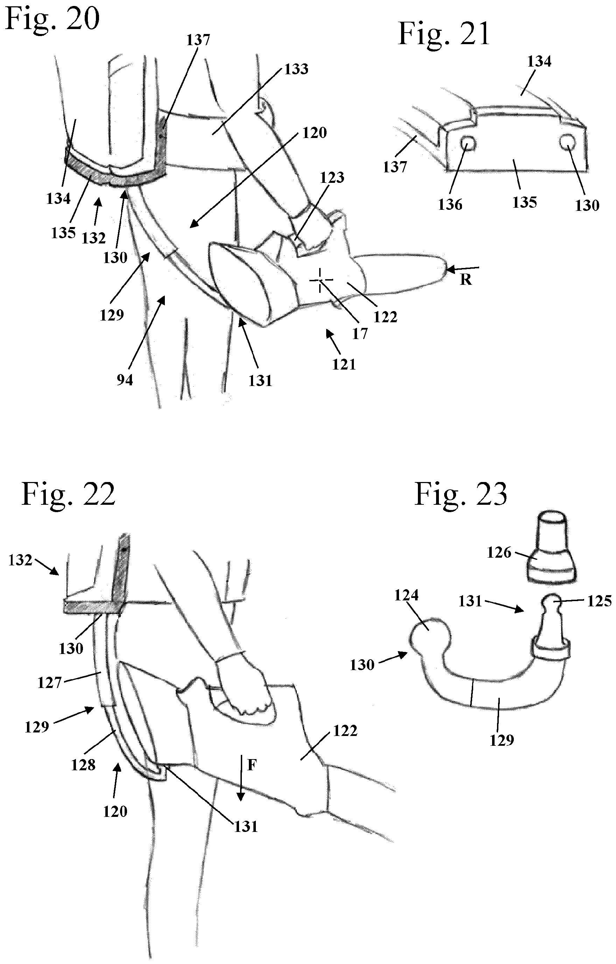

Fig. 20 zeigt ein Ausführungsbeispiel eines Blasgeräts 121, das über eine Abstützvorrichtung 120 mit einer Rückentraganordnung 132 verbunden ist. Fig. 20 zeigt dabei den verbundenen Zustand 94, in dem über die Rückentraganordnung 132 die im Betrieb von der ausströmenden Blasluft erzeugte Rückstoßkraft R sowie das aufgrund des seitlichen Abstands c (Fig. 18) zwischen dem Schwerpunkt 17 des Blasgeräts 121 und der ersten Befestigungsstelle 130 hervorgerufene Kippmoment von der Rückentraganordnung 132 aufgenommen wird. Das Blasgerät 121 besitzt ein Gehäuse 122, an dem ein Handgriff 123 zum Führen des Blasgeräts 121 im Betrieb vorgesehen ist. Die Abstützvorrichtung 120 umfasst eine Verbindungseinrichtung 129, die an einer ersten Befestigungsstelle 130 an einer Bodenplatte 135 der Rückentraganordnung 132 fixiert ist. An einer zweiten Befestigungsstelle 131, die an der Unterseite des Gehäuses 122 des Blasgeräts 121 angeordnet ist, ist die Verbindungseinrichtung 129 mit dem Blasgerät 121 verbunden. Im Ausführungsbeispiel ist die Verbindungseinrichtung 129 teleskopartig ausgebildet, so dass die Länge der Verbindungseinrichtung 129 vom Bediener anpassbar ist. Die Verbindungseinrichtung 129 ragt, wie auch die Verbindungseinrichtung 99, von der Rückentraganordnung 132 seitlich schräg nach unten. Die Rückentraganordnung 132 ist zusätzlich zu nicht gezeigten Schultergurten über einen Hüftgurt 133 am Bediener festgelegt. Die Rückentraganordnung 132 umfasst die Bodenplatte 135 sowie eine Rückenplatte 137, die im Ausführungsbeispiel im Bereich des Hüftgurts 133 angeordnet ist. An der Rückentraganordnung 132 ist eine Energiespeichereinheit 134, insbesondere ein Akku, festgelegt. Die Energieleitung, über die die Energiespeichereinheit 134 sowohl in verbundenem Zustand 94 als auch in unverbundenem Zustand 95 mit dem Blasgerät 121 verbunden ist, ist in Fig. 20 nicht gezeigt.

Fig. 21 zeigt die Bodenplatte 135 von der im Betrieb dem Boden zugewandten Seite. Wie Fig. 21 zeigt, besitzt die Bodenplatte 135 neben der an der rechten Seite der Bodenplatte 135 angeordneten ersten Befestigungsstelle 130 eine zweite, alternative Befestigungsstelle 136, die an der linken Seite der Bodenplatte 135 angeordnet ist. Dadurch kann die Verbindungseinrichtung 129 zum Führen des Blasgeräts 121 mit der rechten Hand an der Befestigungsstelle 130 und zum Führen des Blasgeräts 121 mit der linken Hand an der alternativen Befestigungsstelle 136 festgelegt werden.

Wie Fig. 22 zeigt, ist die zweite Befestigungsstelle 131 an der Unterseite des Gehäuses 122 im hinteren Bereich des Blasgeräts 121 angeordnet. Dadurch ruht ein Teil der Gewichtskraft F des Blasgeräts 121 im Betrieb auf der zweiten Befestigungsstelle 131 und wird über die Abstützvorrichtung 120 in die Rückentraganordnung 132 eingeleitet. Fig. 22 zeigt auch den Aufbau der Verbindungseinrichtung 129 aus einem ersten Abschnitt 127, der an der ersten Befestigungsstelle 130 an der Rückentraganordnung 132 festgelegt ist, sowie einem zweiten Abschnitt 128, der teleskopartig mit dem ersten Abschnitt 127 verbunden ist und der an der zweiten Befestigungsstelle 131 mit dem Gehäuse 122 verbunden ist.

Fig. 23 zeigt schematisch und vereinfacht den Aufbau der Verbindungseinrichtung 129 an der ersten Befestigungsstelle 130 und der zweiten Befestigungsstelle 131. An der ersten Befestigungsstelle 130 besitzt die Verbindungseinrichtung 129 einen Kugelkopf 124, der in eine entsprechende Kugelkopfaufnahme der Rückentraganordnung 132 ragt und dadurch formschlüssig mit der Rückentraganordnung 132 verbunden ist. Die Verbindung an der ersten Befestigungsstelle 130 ist dabei insbesondere lösbar. Die Kugelkopfaufnahme ist so gestaltet, dass an der ersten Befestigungsstelle 130 das von der Gewichtskraft F aufgrund des seitlichen Abstands zwischen Schwerpunkt 17 und Befestigungsstelle 130 ausgeübte Kippmoment an der ersten Befestigungsstelle 130 aufgenommen werden kann. An der zweiten Befestigungsstelle 131 ist ein Kugelkopf 125 vorgesehen, der in eine Aufnahme 126 des Gehäuses 122 ragt. Der Kugelkopf 125 und die Aufnahme 126 sind so aufeinander abgestimmt, dass die Ausblasöffnung 8 des Blasgeräts 121 im Betrieb im gewünschten Winkel nach oben und unten und in horizontaler Richtung nach rechts und links verschwenkt werden kann.

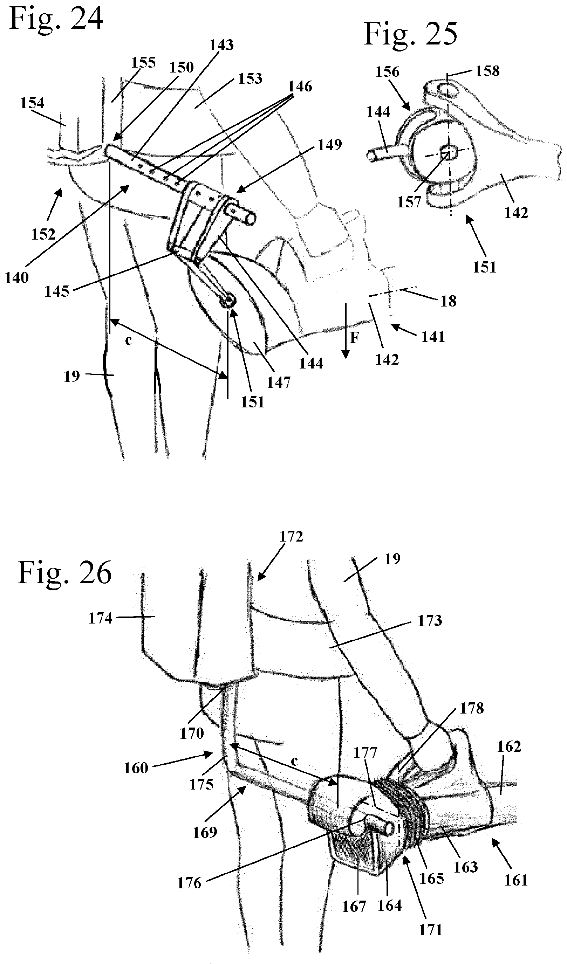

Fig. 24 zeigt ein Ausführungsbeispiel eines Blasgeräts 141, das sich über eine Abstützvorrichtung 140 an einer Rückentraganordnung 152 abstützt. Die Rückentraganordnung 152 umfasst eine Rückentrage 155, an der eine Energiespeichereinheit 154, insbesondere ein Akku angeordnet ist. Es ist eine die Energiespeichereinheit 154 und das Blasgerät 141 verbindende, in Fig. 24 nicht gezeigte Energieleitung vorgesehen. Die Abstützvorrichtung 140 besitzt eine Verbindungseinrichtung 149. An der Rückentrage 155 ist ein seitlich auskragender Träger 143 der Verbindungseinrichtung 149 festgelegt. Der Träger 143 besitzt Befestigungsöffnungen 146, an denen ein Arm 144 der Verbindungseinrichtung 149 in unterschiedlichen Positionen fixiert werden kann. Der Arm 144 besitzt im Ausführungsbeispiel ein Schwenkgelenk 145. Der Arm 144 kann jedoch auch starr ausgebildet sein. Der Arm 144 ragt bezogen auf die Längsmittelachse des Trägers 143 in radialer Richtung des Trägers 143 schräg nach unten. An dem dem Träger 143 abgewandten Ende des Arms 144 ist eine zweite Befestigungsstelle 151 vorgesehen, an der der Arm 144 an einem Gehäuse 142 des Blasgeräts 141 fixiert ist. Die zweite Befestigungsstelle 151 ist dabei im Bereich einer Ansaugöffnung 147 angeordnet. Vorteilhaft liegt die zweite Befestigungsstelle 151 in Verlängerung der Längsmittelachse 18 des Blasrohrs 5. Besonders vorteilhaft liegt die zweite Befestigungsstelle 151 in Verlängerung des Vektors der Rückstoßkraft R (Fig. 4), so dass die Rückstoßkraft R an der zweiten Befestigungsstelle 151 vollständig aufgenommen wird und kein Moment um die zweite Befestigungsstelle 151 erzeugt.

Der Träger 143 ist an einer ersten Befestigungsstelle 150 an der Rückentrage 155 der Rückentraganordnung 152 fixiert. Die erste Befestigungsstelle 150 ist im unteren seitlichen Bereich an der Rückentrage 155 vorgesehen. Die Rückentraganordnung 152 umfasst außerdem einen Hüftgurt 153. Wie Fig. 24 zeigt, besitzt die erste Befestigungsstelle 150 zur zweiten Befestigungsstelle 151 einen in seitlicher Richtung des Bedieners und in horizontaler Richtung gemessenen Abstand c. Aufgrund des Abstands c übt die Gewichtskraft F des Blasgeräts 141 an der ersten Befestigungsstelle 150 ein Kippmoment aus, das an der ersten Befestigungsstelle 150 aufgenommen und in die Rückentrage 155 abgeleitet wird.

Fig. 25 zeigt schematisch die Gestaltung der zweiten Befestigungsstelle 151. An der zweiten Befestigungsstelle 151 ist ein Kardangelenk 156 vorgesehen, das den Arm 144 mit dem Gehäuse 142 des Blasgeräts 141 verbindet. Das Kardangelenk besitzt eine erste, horizontal verlaufende Schwenkachse 157 und eine zweite, vertikal verlaufende Schwenkachse 158. Die erste Schwenkachse 157 verläuft vorteilhaft in seitlicher Richtung und ermöglicht dadurch ein Schwenken der Ausblasöffnung nach oben und unten, während die zweite Schwenkachse 158 ein Schwenken der Ausblasöffnung nach rechts und links ermöglicht.

Fig. 26 zeigt ein Ausführungsbeispiel einer Abstützvorrichtung 160, die an einem Blasgerät 161 vorgesehen ist. Das Blasgerät 161 besitzt ein Gehäuse 162, das einen ersten Abschnitt 163 und einen zweiten Abschnitt 164 aufweist. Im ersten Abschnitt 163 ist die Gebläseeinheit angeordnet, und an dem zweiten Abschnitt 164 kann eine Düse mit Ausblasöffnung angeordnet werden. Ein zweiter Abschnitt 164 des Gehäuses 162 umfasst die Ansaugöffnung 167. Zwischen den beiden Abschnitten 163 und 164 ist ein Schwenkgelenk 165 vorgesehen, das nach Art eines Faltenbalgs ausgebildet ist und eine Bewegung des ersten Abschnitts 163 um eine erste, horizontal liegende Schwenkachse 177 und um eine zweite, vertikal liegende Schwenkachse 178 ermöglicht. Die erste Schwenkachse 177 ist dabei in seitlicher Richtung des Bedieners 19 ausgerichtet.

Die Abstützvorrichtung 160 umfasst eine Verbindungseinrichtung 169, die das Blasgerät 161 mit einer Rückentraganordnung 172 verbindet. Die Rückentraganordnung 172 umfasst einen Hüftgurt 173 sowie nicht gezeigte Schultergurte. An der Rückentraganordnung 172 ist eine Energiespeichereinheit 174 festgelegt. Die Verbindungseinrichtung 169 umfasst einen L-förmig gebogenen Träger 175, der an einer ersten Befestigungsstelle 170 an der Unterseite der Rückentraganordnung 172 festgelegt ist. Von der ersten Befestigungsstelle 170 ragt ein Abschnitt des Trägers 175 im Ausführungsbeispiel senkrecht nach unten. Der abgewinkelte Abschnitt des Trägers 175 ragt bezogen auf den Bediener 19 in seitlicher Richtung und etwa horizontal nach außen. An dem Träger 175 ist der zweite Abschnitt 164 des Gehäuses 162 des Blasgeräts 161 eingehängt. Hierzu ist am Abschnitt 164 des Gehäuses 162 eine nutförmige Aufnahme 176 gebildet, die den Träger 175 übergreift. Vorteilhaft umschließt die Aufnahme 176 den Träger 175 teilweise, so dass sich eine rastende Fixierung ergibt. Es kann vorgesehen sein, dass die Aufnahme 176 fest am Träger 175 gehalten ist. Es kann jedoch auch eine Schwenkbewegung des Abschnitts 164 des Gehäuses 162 um die Längsachse des Stabs 175 vorgesehen sein. Der erste Abschnitt 163 des Gehäuses 162 bildet einen Teil der Abstützvorrichtung 160 und ist an einer zweiten Befestigungsstelle 171 am Schwenkgelenk 165 fixiert. Über den zweiten Abschnitt 164 und den Träger 175 wird ein Teil der Gewichtskraft F des Blasgeräts 161 sowie die von dem aus dem Blasrohr 5 austretenden Luftstrom erzeugte Rückstoßkraft R aufgenommen.

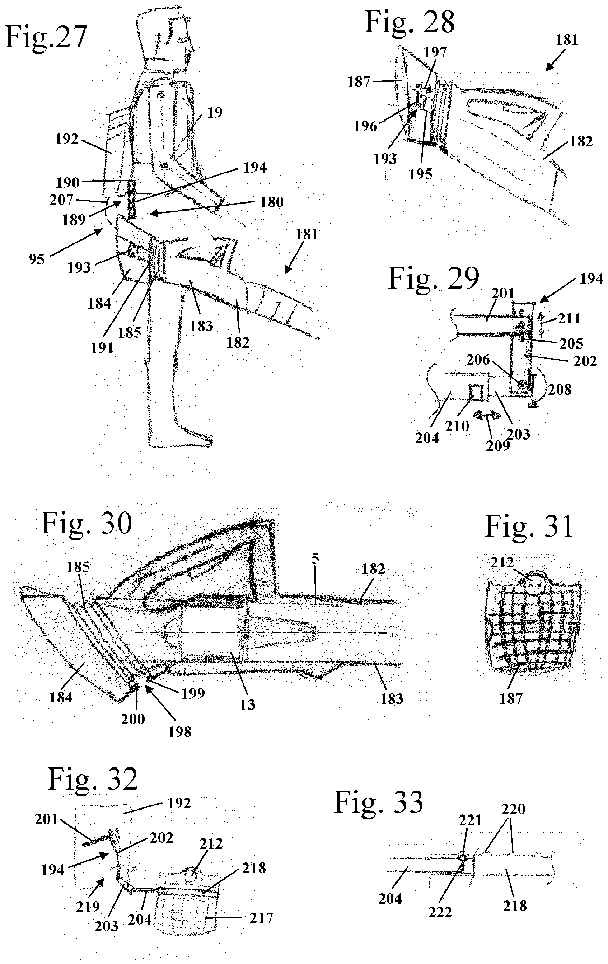

Fig. 27 zeigt ein Ausführungsbeispiel eines Blasgeräts 181, das über eine Abstützvorrichtung 180 mit einer Rückentraganordnung 192 verbindbar ist. Fig. 27 zeigt die Anordnung in unverbundenem Zustand 95. Das Blasgerät 181 besitzt ein Gehäuse 182 mit einem ersten Abschnitt 183 und einem zweiten Abschnitt 184, die über ein Schwenkgelenk 185 gelenkig miteinander verbunden sind. Das Schwenkgelenk 185 ist im Ausführungsbeispiel als Balg ausgebildet. Auch eine andere Gestaltung des Schwenkgelenks 185 kann jedoch vorteilhaft sein. Am Schwenkgelenk 185 sind die beiden Abschnitte 183 und 184 um eine horizontale und eine vertikale Achse gegeneinander verschwenkbar. Die Abstützvorrichtung 180 umfasst eine Verbindungseinrichtung 189, die an einer ersten Befestigungsstelle 190 an der Rückentraganordnung 192 festgelegt ist. Eine zweite Befestigungsstelle 191 ist an der Verbindungsstelle des ersten Abschnitts 183 des Gehäuses 182 mit dem zweiten Abschnitt 184 des Gehäuses 182 gebildet. Wie Fig. 27 zeigt, ist in unverbundenem Zustand 95 die Rückentraganordnung 192 mit dem Blasgerät 181 über eine Energieleitung 207 verbunden. Die Verbindungseinrichtung 189 umfasst ein Verbindungselement 194, das als Hebelgestänge ausgebildet ist. Das Verbindungselement 194 ist an einer Verbindungsstelle 193 mit dem zweiten Abschnitt 184 des Gehäuses 182 verbindbar. In dem in Fig. 27 gezeigten unverbundenen Zustand 95 sind das Verbindungselement 194 und der zweite Abschnitt 184 des Gehäuses 182 nicht miteinander verbunden. Die Verbindungen an der ersten Befestigungsstelle 190 und an der zweiten Befestigungsstelle 191 sind nicht lösbar.

Wie Fig. 28 zeigt, ist die Verbindungsstelle 193 an einer Längsseite des Blasgeräts 181 benachbart zu einer Ansaugöffnung 187 vorgesehen. An der Verbindungsstelle 193 ist eine Schiene 195 vorgesehen, in der ein Befestigungselement 196 in Richtung des Doppelpfeils 197 längsverschiebbar gelagert ist. Dadurch ist der für den Bediener ergonomische Anbindungspunkt des Verbindungselements 194 mit dem zweiten Abschnitt 184 des Gehäuses 182 einstellbar.

Fig. 29 zeigt die Gestaltung des Verbindungselements 194 schematisch im Einzelnen. Das Verbindungselement 194 besitzt einen ersten Abschnitt 201, an dem ein zweiter Abschnitt 202 in Richtung eines Doppelpfeils 211 verschiebbar gehalten ist. Hierzu besitzt der zweite Abschnitt 202 an der Verbindungsstelle zum ersten Abschnitt 201 ein Langloch 205. Am zweiten Abschnitt 202 ist ein dritter Abschnitt 203 über ein Schwenkgelenk 206 wie durch den Pfeil 208 angedeutet schwenkbar gelagert. Am dritten Abschnitt 203 ist ein vierter Abschnitt 204 nach Art eines Teleskops in Richtung des Doppelpfeils 209 längsverschiebbar gelagert. Zur Fixierung der Abschnitte 203 und 204 gegeneinander ist ein Rastelement 210 vorgesehen. Die Abschnitte 201, 202, 203 und 204 sind im Ausführungsbeispiel als Hebel ausgebildet.

Wie Fig. 30 zeigt, ist zwischen dem ersten Abschnitt 183 und dem zweiten Abschnitt 184 am Schwenkgelenk 185 ein Anschlag 198 vorgesehen. Der Anschlag 198 umfasst ein erstes Anschlagelement 199, das am ersten Abschnitt 183 festgelegt ist, sowie ein zweites Anschlagelement 200, das am zweiten Abschnitt 184 festgelegt ist. Die Anschlagelemente 199 und 200 liegen in zusammengedrücktem Zustand des Schwenkgelenks 185 aneinander an. Der Anschlag 198 begrenzt den Weg, um den das Schwenkgelenk 185 maximal zusammengedrückt werden kann.

Fig. 31 zeigt eine Ansicht auf die Ansaugöffnung 187. Im oberen mittleren Bereich ist an der Ansaugöffnung 187 eine Steckdose 212 vorgesehen, in die die Energieleitung 207 (Fig. 27) eingesteckt werden kann.

Die Figuren 32 und 33 zeigen eine alternative Anbindung des Verbindungselements 194 an einer Ansaugöffnung 217. Der erste Abschnitt 201 ist an einer Rückentraganordnung 192 festgelegt. Der vierte Abschnitt 204 ragt in eine Nut 218 an einer Ansaugöffnung 217 eines Blasgeräts. Wie Fig. 33 zeigt, besitzt die Nut 218 an einer Längsseite Rastvertiefungen 220. Der vierte Abschnitt 204 trägt ein Rastelement 221, das über ein Federelement 222 gefedert gelagert ist. Die Darstellung in Fig. 33 ist lediglich schematisch. Es kann jede geeignete Rastvorrichtung vorgesehen sein. Über die Rastvorrichtung kann der vierte Abschnitt 204 in unterschiedlichen Positionen an der Ansaugöffnung 217 festgelegt werden. Das Verbindungselement 194 ist Teil einer Verbindungseinrichtung 219.

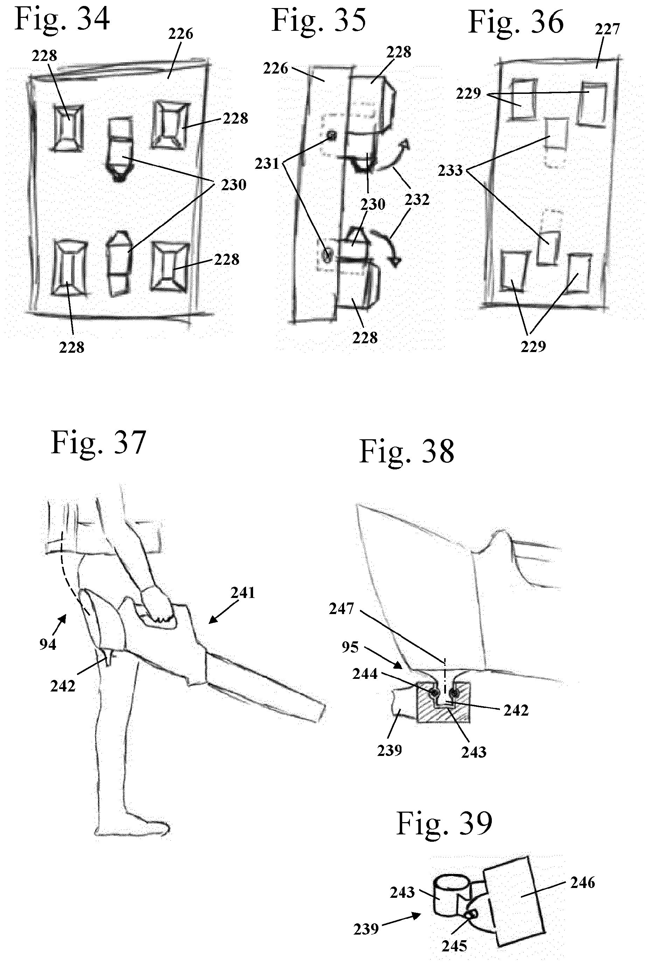

Die Figuren 34 bis 36 zeigen eine alternative Anbindung einer Verbindungseinrichtung an einer Halterung, beispielsweise einer Rückentraganordnung, oder einem Blasgerät. Es sind eine Befestigungsplatte 226 sowie eine Gegenplatte 227 vorgesehen. Die Befestigungsplatte 226 und die Gegenplatte 227 können miteinander verbunden und voneinander gelöst werden. Befestigungsplatte 226 und Gegenplatte 227 können an einer ersten Befestigungsstelle, an einer zweiten Befestigungsstelle oder zwischen zwei Abschnitten einer Verbindungseinrichtung vorgesehen sein. Dabei ist die Befestigungsplatte 226 Teil der Verbindungseinrichtung, und die Gegenplatte 227 ist an der Halterung oder dem Blasgerät anzuordnen oder die Befestigungsplatte 226 ist an der Halterung oder dem Blasgerät anzuordnen, und die Gegenplatte 227 ist Teil der Verbindungseinrichtung. Die Befestigungsplatte 226 besitzt mehrere Zapfen 228. Im Ausführungsbeispiel sind vier Zapfen 228 vorgesehen, die zur Erleichterung des Einführens abgeschrägt ausgebildet sind. Die Befestigungsplatte 226 besitzt außerdem zwei Verriegelungselemente 230, die jeweils über ein Schwenklager 231 schwenkbar gelagert sind. Die Schwenkbewegung der Verriegelungselemente 230 ist in Fig. 35 durch den Pfeil 232 angedeutet.

Die Gegenplatte 227 besitzt Vertiefungen 229 für die Zapfen 228. Die Vertiefungen 229 können auch als Öffnungen ausgebildet sein, in die die Zapfen 228 eingreifen. Für die Verriegelungselemente 230 sind Vertiefungen 233 vorgesehen. In verriegeltem Zustand hintergreifen die Verriegelungselemente 230 den Rand der Vertiefungen 233 und sind dadurch an der Gegenplatte 227 fixiert. Auch die Vertiefungen 233 können als Öffnungen ausgebildet sein.

Fig. 37 zeigt ein von einem Bediener getragenes Blasgerät 241, das über eine in Fig. 39 schematisch gezeigte Verbindungseinrichtung 239 mit einer Rückentrage zu verbinden ist. Fig. 37 zeigt das Blasgerät 241 in unverbundenem Zustand 94. Die Verbindungseinrichtung 239 umfasst einen Zapfen 242, der, wie Fig. 38 zeigt, in verbundenem Zustand 95 in eine Aufnahme 243 der Verbindungseinrichtung 239 ragt. Der Zapfen ist in der Aufnahme 243 um eine im Ausführungsbeispiel vertikal angeordnete Schwenkachse 247 schwenkbar. Zur Fixierung des Zapfens 242 in der Aufnahme 243 in Richtung der Schwenkachse 247 ist ein Rastelement 244 vorgesehen, das beispielsweise ein federnder Ring sein kann. Wie Fig. 39 schematisch zeigt, umfasst die Verbindungseinrichtung 239 einen Abschnitt 246, der mit der Aufnahme 243 über ein Schwenkgelenk 245 verbunden ist. Der Abschnitt 246 kann unmittelbar an der Rückentrage festgelegt oder über weitere Elemente mit der Rückentrage verbunden sein.

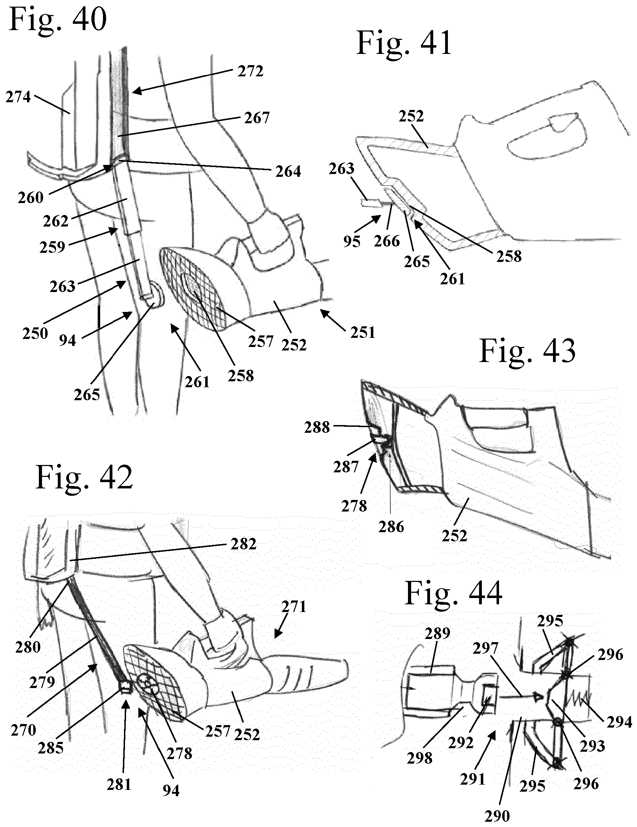

Fig. 40 zeigt ein Ausführungsbeispiel eines Blasgeräts 251, das über eine Abstützvorrichtung 250 mit einer Rückentraganordnung 272 verbunden ist. Das Blasgerät 251 besitzt ein Gehäuse 252, das an seiner im Betrieb nach hinten gewandten Seite eine Ansaugöffnung 257 aufweist. In dem die Ansaugöffnung 257 überdeckenden Gitter ist etwa mittig eine Aufnahme 258 für eine Verbindungseinrichtung 259 vorgesehen. Die Verbindungseinrichtung 259 ist an einer ersten Befestigungsstelle 260 an der Rückentraganordnung 272 festgelegt. An einer zweiten Befestigungsstelle 261 ist die Verbindungseinrichtung 259 in dem in Fig. 40 gezeigten unverbundenem Zustand 94 nicht mit dem Blasgerät 251 verbunden. Die erste Befestigungsstelle 260 ist bezogen auf den Bediener 19 am unteren Ende der rechten Längsseite der Rückentraganordnung 272 angeordnet. Die Verbindungseinrichtung 259 ist über ein Schwenkgelenk 264 mit der Rückentraganordnung 272 verbunden. An der Rückentraganordnung 272 ist eine Energiespeichereinheit 274, insbesondere ein Akku, festgelegt. Die Verbindungseinrichtung 259 umfasst einen ersten Abschnitt 262, der am Schwenkgelenk 264 gehalten ist, sowie einen zweiten Abschnitt 263, der teleskopartig in den ersten Abschnitt 262 einschiebbar ist. An dem dem ersten Abschnitt 262 abgewandten Ende des zweiten Abschnitts 263 ist eine Verbindungsplatte 265 gehalten, die in der Aufnahme 258 festgelegt werden kann.

Wie Fig. 40 zeigt, besitzt die Rückentraganordnung 272 an ihrer rechten Längsseite eine Vertiefung 267, die zur Aufnahme der Verbindungseinrichtung 259 in unverbundenem Zustand 94 dient. Hierzu werden die beiden Abschnitte 262 und 263 ineinander geschoben und anschließend über das Schwenkgelenk 264 an die Rückentraganordnung 272 geklappt, bis die Verbindungseinrichtung 259 mindestens teilweise in der Vertiefung 267 liegt. Vorteilhaft sind Mittel zur Fixierung der Verbindungseinrichtung 259 in der Vertiefung 267 vorgesehen.

In Fig. 41 ist ausschnittsweise der verbundene Zustand 95 gezeigt. In diesem Zustand ist die Verbindungsplatte 265 an der zweiten Befestigungsstelle 261 in der Aufnahme 258 angeordnet. Die Verbindungsplatte 265 kann beispielsweise über eine Magnetverbindung in der Aufnahme 258 fixiert sein. Auch eine andere Art der Fixierung kann vorteilhaft sein. Die Verbindungsplatte 265 ist mit dem zweiten Abschnitt 263 über ein Schwenklager 266 verbunden. Vorteilhaft lässt das Schwenklager 266 Schwenkbewegungen in seitlicher Richtung und um eine horizontale Schwenkachse zu. Die Verbindungsplatte 265 ist insbesondere gefedert.

Fig. 42 zeigt ein Ausführungsbeispiel eines Blasgeräts 271, das über eine Abstützvorrichtung 270 mit einer Rückentraganordnung 282 verbunden ist. Die Abstützvorrichtung 270 umfasst eine Verbindungseinrichtung 279, die an einer ersten Befestigungsstelle 280 an der Rückentraganordnung 282 festgelegt ist. Die erste Befestigungsstelle 280 ist an der bezogen auf den Bediener 19 rechts liegenden Unterkante der Rückentraganordnung 282 vorgesehen. Die Verbindungseinrichtung 279 ragt seitlich schräg nach unten und ist als starrer Stab ausgebildet. An ihrem der ersten Befestigungsstelle 280 abgewandten Ende besitzt die Verbindungseinrichtung 279 ein Verbindungselement 285, das zur Verbindung mit einer Aufnahme 278 des Gehäuses 252 des Blasgeräts 271 an einer zweiten Befestigungsstelle 281 dient. Das Gehäuse des Blasgeräts 271 ist identisch zum Gehäuse 252 des Blasgeräts 251 ausgebildet und unterscheidet sich lediglich durch die Aufnahme 278. Wie beim Ausführungsbeispiel nach

Fig. 40 ist die Aufnahme 278 mittig in einer Ansaugöffnung 257 des Blasgeräts 271 angeordnet. Fig. 42 zeigt die Anordnung in unverbundenem Zustand 94, in dem das Verbindungselement 285 nicht in der Aufnahme 278 angeordnet ist. Eine Energieleitung, die das Blasgerät 271 auch in unverbundenem Zustand 94 mit der Rückentraganordnung 282 verbindet, ist in Fig. 42 nicht gezeigt.

Fig. 43 zeigt die Aufnahme 278 schematisch. Die Aufnahme 278 umfasst eine Kupplung 287, die über ein Gelenk 286 am Gehäuse 252 gehalten ist und sich dadurch zum Verbindungselement 285 ausrichten kann. Die Kupplung 287 ist in einer Vertiefung 288 angeordnet, die vorteilhaft trichterförmig ausgebildet ist, so dass das Verbindungselement 285 durch die Wände der Vertiefung 288 zur Kupplung 287 geleitet wird. Die Kupplung 287 kann beispielsweise eine magnetische Kupplung sein.

Fig. 44 zeigt ein Ausführungsbeispiel einer magnetischen Kupplung schematisch. Die Verbindungseinrichtung 289, die zur Verbindung mit einer Rückentraganordnung dient, trägt einen Magneten 292. Am Blasgerät ist eine Aufnahme 290 ausgebildet, an deren Boden ein Betätigungselement 293 vorgesehen ist, das über eine Feder 294 gefedert gelagert ist. Mit dem Betätigungselement 293 sind zwei Haltearme 295 verbunden, die jeweils über ein Schwenklager 296 mit dem Betätigungselement 293 verbunden sind. Wird die Verbindungseinrichtung 289 in Richtung des Pfeils 297 in die Aufnahme 290 bewegt, so wird das Betätigungselement 293 entgegen der Kraft der Feder 294 in Fig. 44 nach rechts bewegt. Die Haltearme 295 besitzen Gegenlager, die eine Bewegung der Haltearme 295 in Fig. 44 nach rechts verhindern. Dadurch schwenken die Haltearme 295 an den Schwenklagern 296 in die Aufnahme 290 und greifen in eine Vertiefung 298 der Verbindungseinrichtung 289 ein. Dadurch wird eine formschlüssige Sicherung der Verbindungseinrichtung 289 erreicht. Die Anordnung ist vorteilhaft an einer zweiten Befestigungsstelle 291 vorgesehen.

In allen Ausführungsbeispielen stützt die Abstützvorrichtung 20, 90, 120, 140, 160, 180, 270 das Arbeitsgerät derart ab, dass das Kippmoment, das die Gewichtskraft des Arbeitsgeräts an der ersten Befestigungsstelle aufgrund des seitlichen Abstands a, c ausübt, mindestens teilweise abgestützt wird. Vorteilhaft wird zusätzlich die Gewichtskraft F des Arbeitsgeräts und/oder die Rückstoßkraft R, die von einem aus dem Blasgerät austretenden Blasluftstrom erzeugt wird, mindestens teilweise, vorteilhaft vollständig aufgenommen.

Ortsangaben wie "vor", "hinter", "seitlich", "oben", "unten", etc. beziehen sich in allen Ausführungsbeispielen auf den Bediener 19 und eine Arbeitslage 10 des Blasgeräts.

## Patentansprüche

1. Anordnung mit einem handgeführten Arbeitsgerät und mit einer Abstützvorrichtung, wobei das Arbeitsgerät ein Gehäuse (92, 122, 142, 162, 182, 252) besitzt, in dem eine Antriebseinheit des Arbeitsgeräts angeordnet ist, und an dem mindestens ein Handgriff (93, 123) zum Führen des Arbeitsgeräts im Betrieb angeordnet ist, wobei die Abstützvorrichtung (90, 120, 140, 160, 180, 270) zur Abstützung des Arbeitsgeräts im Betrieb vorgesehen ist und eine von einem Bediener (19) zu tragende Halterung (21) aufweist, wobei die Abstützvorrichtung (90, 120, 140, 160, 180, 270) eine Verbindungseinrichtung (99, 129, 149, 169, 189, 219, 239, 259, 279, 289) umfasst, die an einer ersten Befestigungsstelle (100, 130, 150, 170, 190, 260, 280) an der Halterung (21) und an einer zweiten Befestigungsstelle (101, 131, 151, 171, 191, 261, 281) an dem Arbeitsgerät gehalten ist, wobei die Verbindungseinrichtung (99, 129, 149, 169, 189, 219, 239, 259, 279, 289) an der zweiten Befestigungsstelle (101, 131, 151, 171, 191, 261, 281) um mindestens eine Schwenkachse (117, 157, 158, 177, 178, 247) schwenkbar gelagert ist, und wobei die Verbindungseinrichtung (99, 129, 149, 169, 189, 219, 239, 259, 279, 289) das Arbeitsgerät in Arbeitslage (10) bezogen auf den Bediener (19) nach hinten abstützt und eine Bewegung des Arbeitsgeräts nach hinten verhindert, wobei der Schwerpunkt (17) des Arbeitsgeräts und die erste Befestigungsstelle (100, 130, 150, 170, 190, 260, 280) in Arbeitslage (10) des Arbeitsgeräts einen in horizontaler und bezogen auf den Bediener (19) in seitlicher Richtung gemessenen Abstand (a, c) zueinander aufweisen, und wobei die Halterung (21) an der ersten Befestigungsstelle (100, 130, 150, 170, 190, 260, 280) Mittel zur mindestens teilweisen Abstützung des Kippmoments, das die Gewichtskraft (F) des Arbeitsgeräts an der ersten Befestigungsstelle (100, 130, 150, 170, 190, 260, 280) aufgrund des seitlichen Abstands (a, c) ausübt, aufweist, **dadurch gekennzeichnet, dass** die Halterung (21) an einer Rückentraganordnung (102, 132, 152, 172, 192, 272, 282) ausgebildet ist welche Schultergurte (103) umfasst mit denen die Rückentraganordnung von einem Bediener auf dem Rücken getragen werden kann.

2. Anordnung nach Anspruch 1,
**dadurch gekennzeichnet, dass** der Abstand (a, c) von 5 cm bis 15 cm beträgt.

3. Anordnung nach Anspruch 1 oder 2,
**dadurch gekennzeichnet, dass** die zweite Befestigungsstelle (101, 131, 151, 171, 191, 261, 281) und der Schwerpunkt (17) des Arbeitsgeräts in einer gemeinsamen vertikalen Ebene (26) liegen.

4. Anordnung nach Anspruch 3,
**dadurch gekennzeichnet, dass** der Handgriff (93) etwa oberhalb des Schwerpunkts (17) des Arbeitsgeräts liegt.

5. Anordnung nach Anspruch 3 oder 4,
**dadurch gekennzeichnet, dass** das Arbeitsgerät ein Blasgerät (91, 121, 141, 161, 181, 241) ist, das im Betrieb einen Blasluftstrom durch ein Blasrohr (5) fördert und dass die Verbindungseinrichtung (99, 129, 149, 169, 189, 219, 239, 259, 279, 289) im Betrieb die von dem austretenden Blasluftstrom erzeugte Rückstoßkraft (R) aufnimmt.

6. Anordnung nach Anspruch 5,
**dadurch gekennzeichnet, dass** die zweite Befestigungsstelle (101, 131, 151, 171, 191, 261, 281) und die Längsmittelachse (18) des Blasrohrs (5) in der gemeinsamen vertikalen Ebene (26) liegen.

7. Anordnung nach einem der Ansprüche 1 bis 6,
**dadurch gekennzeichnet, dass** das Arbeitsgerät in Arbeitslage (10) zu der Halterung (21) einen bezogen auf den Bediener (19) in seitlicher Richtung gemessenen Abstand (b) besitzt.

8. Anordnung nach einem der Ansprüche 1 bis 7,
**dadurch gekennzeichnet, dass** die Verbindungseinrichtung (149, 169, 239) an der zweiten Befestigungsstelle (151, 171) um eine vertikale Schwenkachse (158, 178, 247) schwenkbar gelagert ist.

9. Anordnung nach einem der Ansprüche 1 bis 8,
**dadurch gekennzeichnet, dass** die Verbindungseinrichtung (99, 149, 169) an der zweiten Befestigungsstelle (101, 151, 171) um eine horizontale Schwenkachse (27, 117, 157, 177) schwenkbar gelagert ist.

10. Anordnung nach einem der Ansprüche 1 bis 9,
**dadurch gekennzeichnet, dass** die zweite Befestigungsstelle (131) an einem Kugelgelenk (32) ausgebildet ist.

11. Anordnung nach einem der Ansprüche 1 bis 10,
**dadurch gekennzeichnet, dass** die erste Befestigungsstelle (100) an der dem Arbeitsgerät zugewandten Hochseite der Rückentraganordnung (102) angeordnet ist.

12. Anordnung nach einem der Ansprüche 1 bis 11,
**dadurch gekennzeichnet, dass** die zweite Befestigungsstelle (131) an einer Unterseite des Gehäuses (122) des Arbeitsgeräts angeordnet ist.

13. Anordnung nach einem der Ansprüche 1 bis 12,
**dadurch gekennzeichnet, dass** das Arbeitsgerät ein Blasgerät (181) ist, das ein Gehäuse (182) mit einem ersten Abschnitt (193) und einem zweiten Abschnitt (184) besitzt, die über ein Schwenkgelenk (185) gelenkig miteinander verbunden sind.

14. Anordnung nach Anspruch 13,
**dadurch gekennzeichnet, dass** das Schwenkgelenk (185) als Balg ausgebildet ist.

15. Anordnung nach einem der Ansprüche 1 bis 14,
**dadurch gekennzeichnet, dass** die Verbindung zwischen dem Arbeitsgerät und der Halterung (21) lösbar ist.

16. Anordnung nach einem der Ansprüche 1 bis 15,
**dadurch gekennzeichnet, dass** an der Rückentraganordnung (102, 132, 152, 172, 192, 272, 282) eine Energiespeichereinheit (104, 134, 154, 174, 274) gehalten ist, wobei die Energiespeichereinheit (104, 134, 154, 174, 274) über eine Energieleitung (115, 207) mit dem Arbeitsgerät verbunden ist.

## Claims

1. Arrangement having a hand-held work apparatus and having a support device, wherein the work apparatus has a housing (92, 122, 142, 162, 182, 252) in which a drive unit of the work apparatus is arranged, and on which at least one handle (93, 123) for guiding the work apparatus during operation is arranged, wherein the support device (90, 120, 140, 160, 180, 270) is provided for supporting the work apparatus during operation and has a holder (21) to be carried by an operator (19), wherein the support device (90, 120, 140, 160, 180, 270) comprises a connecting means (99, 129, 149, 169, 189, 219, 239, 259, 279, 289) which is held at a first fastening point (100, 130, 150, 170, 190, 260, 280) on the holder (21) and at a second fastening point (101, 131, 151, 171, 191, 261, 281) on the work apparatus, wherein the connecting means (99, 129, 149, 169, 189, 219, 239, 259, 279, 289) is mounted at the second fastening point (101, 131, 151, 171, 191, 261, 281) so as to be pivotable about at least one pivot axis (117, 157, 158, 177, 178, 247), and wherein the connecting means (99, 129, 149, 169, 189, 219, 239, 259, 279, 289) supports the work apparatus towards the rear in the working position (10) with respect to the operator (19) and prevents the work apparatus from moving towards the rear, wherein the centre of gravity (17) of the work apparatus and the first fastening point (100, 130, 150, 170, 190, 260, 280) have, in the working position (10) of the work apparatus, a spacing (a, c) from one another measured in a horizontal direction and in a lateral direction with respect to the operator (19), and wherein the holder (21) has, at the first fastening point (100, 130, 150, 170, 190, 260, 280), means for at least partially supporting the tilting moment that the weight force (F) of the work apparatus exerts on the first fastening point (100, 130, 150, 170, 190, 260, 280) on account of the lateral spacing (a, c),
**characterized in that** the holder (21) is formed on a backpack arrangement (102, 132, 152, 172, 192, 272, 282) which comprises shoulder straps (103) with which the backpack arrangement can be carried on an operator's back.

2. Arrangement according to Claim 1,
**characterized in that** the spacing (a, c) ranges from 5 cm to 15 cm.

3. Arrangement according to Claim 1 or 2,
**characterized in that** the second fastening point (101, 131, 151, 171, 191, 261, 281) and the centre of gravity (17) of the work apparatus lie in a common vertical plane (26).

4. Arrangement according to Claim 3,
**characterized in that** the handle (93) lies approximately above the centre of gravity (17) of the work apparatus.

5. Arrangement according to Claim 3 or 4,
**characterized in that** the work apparatus is a blowing apparatus (91, 121, 141, 161, 181, 241) which, during operation, delivers a stream of blown air through a blowing tube (5), and **in that** the connecting means (99, 129, 149, 169, 189, 219, 239, 259, 279, 289), during operation, absorbs the recoil force (R) created by the emerging stream of blown air.

6. Arrangement according to Claim 5,
**characterized in that** the second fastening point (101, 131, 151, 171, 191, 261, 281) and the longitudinal central axis (18) of the blowing tube (5) lie in the common vertical plane (26).

7. Arrangement according to one of Claims 1 to 6,
**characterized in that** the work apparatus has, in the working position (10), a spacing (b) from the holder (21) that is measured in a lateral direction with respect to the operator (19).

8. Arrangement according to one of Claims 1 to 7,
**characterized in that** the connecting means (149, 169, 239) is mounted at the second fastening point (151, 171) so as to be pivotable about a vertical pivot axis (158, 178, 247).

9. Arrangement according to one of Claims 1 to 8,
**characterized in that** the connecting means (99, 149, 169) is mounted at the second fastening point (101, 151, 171) so as to be pivotable about a horizontal pivot axis (27, 117, 157, 177).

10. Arrangement according to one of Claims 1 to 9,
**characterized in that** the second fastening point (131) is formed at a ball joint (32).

11. Arrangement according to one of Claims 1 to 10,
**characterized in that** the first fastening point (100) is arranged on that vertical side of the backpack arrangement (102) that faces the work apparatus.

12. Arrangement according to one of Claims 1 to 11,
**characterized in that** the second fastening point (131) is arranged on an underside of the housing (122) of the work apparatus.

13. Arrangement according to one of Claims 1 to 12,
**characterized in that** the work apparatus is a blowing apparatus (181) which has a housing (182) with a first portion (193) and a second portion (184) that are connected together in an articulated manner via a pivot joint (185).

14. Arrangement according to Claim 13,
**characterized in that** the pivot joint (185) is in the form of a bellows.

15. Arrangement according to one of Claims 1 to 14,
**characterized in that** the connection between the work apparatus and the holder (21) is releasable.

16. Arrangement according to one of Claims 1 to 15,
**characterized in that** an energy storage unit (104, 134, 154, 174, 274) is held on the backpack arrangement (102, 132, 152, 172, 192, 272, 282), wherein the energy storage unit (104, 134, 154, 174, 274) is connected to the work apparatus via a power line (115, 207).

## Revendications

1. Dispositif comportant un appareil de travail à main et comportant un dispositif d'appui, l'appareil de travail ayant un boîtier (92, 122, 142, 162, 182, 252) dans lequel est disposée une unité d'entraînement de l'appareil de travail et sur lequel est disposée au moins une poignée (93, 123) pour guider l'appareil de travail lors du fonctionnement, le dispositif d'appui (90, 120, 140, 160, 180, 270) étant prévu pour l'appui de l'appareil de travail lors du fonctionnement et présentant une attache (21) à porter par un utilisateur (19), le dispositif d'appui (90, 120, 140, 160, 180, 270) comprenant un dispositif de liaison (99, 129, 149, 169, 189, 219, 239, 259, 279, 289) qui est retenu en un premier point de fixation (100, 130, 150, 170, 190, 260, 280) sur l'attache (21) et en un deuxième point de fixation (101, 131, 151, 171, 191, 261, 281) sur l'appareil de travail, le dispositif de liaison (99, 129, 149, 169, 189, 219, 239, 259, 279, 289), au deuxième point de fixation (101, 131, 151, 171, 191, 261, 281), étant monté pivotant autour d'au moins un axe de pivotement (117, 157, 158, 177, 178, 247), et le dispositif de liaison (99, 129, 149, 169, 189, 219, 239, 259, 279, 289) assurant l'appui de l'appareil de travail, dans la position de travail (10), vers l'arrière par rapport à l'utilisateur (19) et empêchant un déplacement de l'appareil de travail vers l'arrière, le centre de gravité (17) de l'appareil de travail et le premier point de fixation (100, 130, 150, 170, 190, 260, 280), dans la position de travail (10) de l'appareil de travail, présentant l'un par rapport à l'autre un écartement (a, c) mesuré dans une direction horizontale et dans une direction latérale par rapport à l'utilisateur (19), et l'attache (21) au premier point de fixation (100, 130, 150, 170, 190, 260, 280) comportant des moyens pour l'appui au moins partiel du couple de basculement qu'exerce le poids (F) de l'appareil de travail au premier point de fixation (100, 130, 150, 170, 190, 260, 280) en raison de l'écartement latéral (a, c),
**caractérisé en ce que** l'attache (21) est formée sur un dispositif de support à dos (102, 132, 152, 172, 192, 272, 282), lequel comporte des sangles d'épaule (103) à l'aide desquelles le dispositif de support à dos peut être porté sur le dos par un utilisateur.

2. Dispositif selon la revendication 1,
**caractérisé en ce que** l'écartement (a, c) est de 5 cm à 15 cm.

3. Dispositif selon la revendication 1 ou 2,
**caractérisé en ce que** le deuxième point de fixation (101, 131, 151, 171, 191, 261, 281) et le centre de gravité (17) de l'appareil de travail sont situés dans un plan vertical commun (26).

4. Dispositif selon la revendication 3,
**caractérisé en ce que** la poignée (93) est située approximativement au-dessus du centre de gravité (17) de l'appareil de travail.

5. Dispositif selon la revendication 3 ou 4,
**caractérisé en ce que** l'appareil de travail est un appareil de soufflage (91, 121, 141, 161, 181, 241) qui, lors du fonctionnement, refoule un courant d'air de soufflage à travers un tube de soufflage (5), et **en ce que** le dispositif de liaison (99, 129, 149, 169, 189, 219, 239, 259, 279, 289), lors du fonctionnement, reçoit la force de recul (R) produite par le courant d'air de soufflage sortant.

6. Dispositif selon la revendication 5,
**caractérisé en ce que** le deuxième point de fixation (101, 131, 151, 171, 191, 261, 281) et l'axe longitudinal médian (18) du tube de soufflage (5) sont situés dans le plan vertical commun (26).

7. Dispositif selon l'une des revendications 1 à 6,
**caractérisé en ce que** l'appareil de travail, dans la position de travail (10), a avec l'attache (21) un écartement (b) mesuré dans une direction latérale par rapport à l'utilisateur (19).

8. Dispositif selon l'une des revendications 1 à 7,
**caractérisé en ce que** le dispositif de liaison (149, 169, 239), au deuxième point de fixation (151, 171), est monté pivotant autour d'un axe de pivotement vertical (158, 178, 247).

9. Dispositif selon l'une des revendications 1 à 8,
**caractérisé en ce que** le dispositif de liaison (99, 149, 169), au deuxième point de fixation (101, 151, 171), est monté pivotant autour d'un axe de pivotement horizontal (27, 117, 157, 177).

10. Dispositif selon l'une des revendications 1 à 9,
**caractérisé en ce que** le deuxième point de fixation (131) est formé au niveau d'un joint à rotule (32).

11. Dispositif selon l'une des revendications 1 à 10,
**caractérisé en ce que** le premier point de fixation (100) est disposé sur le côté vertical, tourné vers l'appareil de travail, du dispositif de support à dos (102).

12. Dispositif selon l'une des revendications 1 à 11,
**caractérisé en ce que** le deuxième point de fixation (131) est disposé sur un côté inférieur du boîtier (122) de l'appareil de travail.

13. Dispositif selon l'une des revendications 1 à 12,
**caractérisé en ce que** l'appareil de travail est un appareil de soufflage (181) qui a un boîtier (182) comportant une première partie (193) et une deuxième partie (184) qui sont reliées l'une à l'autre de manière articulée par le biais d'une articulation pivotante (185).

14. Dispositif selon la revendication 13,
**caractérisé en ce que** l'articulation pivotante (185) est réalisée sous forme de soufflet.

15. Dispositif selon l'une des revendications 1 à 14,
**caractérisé en ce que** la liaison entre l'appareil de travail et l'attache (21) est libérable.

16. Dispositif selon l'une des revendications 1 à 15,
**caractérisé en ce qu'**une unité d'accumulation d'énergie (104, 134, 154, 174, 274) est retenue sur le dispositif de support à dos (102, 132, 152, 172, 192, 272, 282), l'unité d'accumulation d'énergie (104, 134, 154, 174, 274) étant reliée à l'appareil de travail par le biais d'une conduite d'énergie (115, 207).
